(19) **Europäisches Patentamt European Patent Office Office européen des brevets**

(11) **EP 3 950 794 B1**

(12) **EUROPEAN PATENT SPECIFICATION**

(45) Date of publication and mention of the grant of the patent:
**22.01.2025 Bulletin 2025/04**

(21) Application number: **20779616.0**

(22) Date of filing: **27.03.2020**

(51) International Patent Classification (IPC):
*C08J 9/16* (2006.01)   *C08J 9/228* (2006.01)
*C08J 9/00* (2006.01)   *C08J 9/12* (2006.01)
*C08J 9/232* (2006.01)   *C08J 9/18* (2006.01)

(52) Cooperative Patent Classification (CPC):
**C08J 9/122; C08J 9/0066; C08J 9/18; C08J 9/232;**
C08J 2201/03; C08J 2201/034; C08J 2377/00

(86) International application number:
**PCT/JP2020/014341**

(87) International publication number:
**WO 2020/196893 (01.10.2020 Gazette 2020/40)**

(54) **POLYAMIDE-BASED RESIN PRE-EXPANDED PARTICLES, POLYAMIDE-BASED RESIN FOAM SHAPED PRODUCT, AND METHOD OF PRODUCING POLYAMIDE-BASED RESIN FOAM SHAPED PRODUCT**

VOREXPANDIERTE PARTIKEL AUS POLYAMID-HARZ, SCHAUMFÖRMIGES PRODUKT AUS POLYAMID-HARZ UND VERFAHREN ZUR HERSTELLUNG EINES SCHAUMFÖRMIGEN PRODUKTS AUS POLYAMID-HARZ

PARTICULES PRÉ-EXPANSÉES DE RÉSINE À BASE DE POLYAMIDE, PRODUIT EN FORME DE MOUSSE DE RÉSINE À BASE DE POLYAMIDE ET MÉTHODE DE PRODUCTION D'UN PRODUIT EN FORME DE MOUSSE DE RÉSINE À BASE DE POLYAMIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2019 JP 2019063446**
**07.02.2020 JP 2020020117**

(43) Date of publication of application:
**09.02.2022 Bulletin 2022/06**

(73) Proprietor: **Asahi Kasei Kabushiki Kaisha**
**Tokyo 1000006 (JP)**

(72) Inventors:
• **NAKAYAMA, Ryota**
**Tokyo 100-0006 (JP)**

• **FUJINO, Yoshinori**
**Tokyo 100-0006 (JP)**
• **ONOE, Takashi**
**Tokyo 100-0006 (JP)**
• **TONOOKA, Terumichi**
**Tokyo 100-0006 (JP)**

(74) Representative: **D Young & Co LLP**
**3 Noble Street**
**London EC2V 7BQ (GB)**

(56) References cited:
**WO-A1-2016/147582      WO-A1-2016/147582**
**WO-A1-2019/198642      WO-A1-2020/031803**
**JP-A- 2018 043 487      JP-A- 2018 043 487**
**JP-A- 2018 043 490      JP-A- 2018 043 490**
**JP-A- 2018 044 127**

**Description**

TECHNICAL FIELD

The present disclosure relates to polyamide-based resin pre-expanded particles, a polyamide-based resin foam shaped product, and a method of producing a polyamide-based resin foam shaped product.

BACKGROUND

In recent years, reduction in the weights of automotive bodies has been demanded as an environmental effort for reducing exhaust gases in the automotive industry. To meet this demand, members made from plastics that are lighter than other materials, such as metals, have been increasingly used as exterior and interior materials of automobiles.

In particular, expectations for foam shaped products are growing to achieve further reduction in weights. Foams which are generally used are produced from general-purpose resins such as polyethylene, polystyrene, and polypropylene. Such resins are inferior in heat resistance and thus cannot be used for automobile members or the like for which higher heat resistance is required.

On the other hand, engineering resins, and particularly polyamide-based resins, are known as plastics having high heat resistance in addition to excellent wear resistance, chemical resistance, and so forth.

Accordingly, foam shaped products of polyamide are considered to be of use in applications for which higher heat resistance is required.

Examples of techniques for producing resin foam shaped products include extrusion foaming, foam injection molding, and in-mold foam shaping (also referred to as bead foam shaping).

Extrusion foaming is a method in which an organic or inorganic foaming agent is injected into a molten resin using an extruder and the pressure is subsequently released at an outlet of the extruder to obtain a plate, sheet, or columnar foam having a specific cross-sectional shape, and then the foam is heat processed in a mold or is cut and adhered to shape the foam into a desired shape.

Foam injection molding is a method in which an expandable resin is injection molded and foamed in a mold to obtain a foam shaped product including pores.

In-mold foam molding is a method in which resin pre-expanded particles are loaded into a mold, are heated by steam or the like to cause foaming simultaneously with thermal fusion of the pre-expanded particles to one another to obtain a foam shaped product. In-mold foam molding is widely used in industry due to advantages such as ease of freely setting the product shape, ease of obtaining a foam shaped product with a high expansion ratio, and so forth.

PTL 1, for example, discloses a technique in which polyamide-based resin particles and methyl alcohol are supplied into an autoclave with a water solvent, the system is heated and subsequently exposed to atmospheric pressure to obtain pre-expanded particles, and then these pre-expanded particles are loaded into a mold of a shaping machine and are shaped to obtain a polyamide-based resin foam shaped product.

PTL 2 discloses a technique in which carbon dioxide gas is blown into polyamide-based resin particles in an autoclave, the resultant particles are heated to obtain pre-expanded particles, and then these pre-expanded particles are loaded into a mold of a shaping machine and are heated by hot air to obtain a polyamide-based resin foam product.

In addition, PTL 3 discloses a technique for producing a polyamide-based resin foam shaped product by loading aliphatic polyamide pre-expanded particles into a mold of a molding machine and heating them with steam.

WO 2016/147582 discloses a polyamide resin foam molded article and a method for producing a polyamide resin foam molded article.

CITATION LIST

Patent Literature

PTL 1: JP S61-268737 A
PTL 2: JP 2011-105879 A
PTL 3: JP 2018-44127 A

SUMMARY

(Technical Problem)

However, the foam shaped product described in PTL 1 contains methyl alcohol in the cells thereof, which is extremely harmful to the human body. Moreover, the methyl alcohol may be re-volatilized in a high-temperature environment, leading to expansion of the shaped product and deterioration of external appearance thereof. Accordingly, it is necessary to release residual methyl alcohol from the cells over a long period after shaping.

The foam shaped product described in PTL 2 is obtained by using hot air as a heating medium in shaping. However, hot air has low thermal conductivity, which makes uniform heating of the shaped product difficult. At the perimeter of a slit in the mold that serves as an inlet for the hot air during this shaping, pre-expanded particles that are heated by the hot air become thermally fused and are then continuously exposed to high-temperature air, which may cause oxidative degradation of the resin, leading to coloring and deterioration of physical properties of the resin. Moreover, heat is not sufficiently transferred at locations other than at the perimeter of the slit, and thus the temperature of the resin is not sufficiently increased at these locations. As a result, it may not be possible to obtain a shaped product that is uniformly fused because the pre-expanded particles have a low tendency to thermally fuse.

Moreover, the foam shaped product disclosed in PTL 3 requires usage of steam at a low temperature upon molding in order to retain closed cell structures of the foamed particles. The pre-expanded particles may thus not be sufficiently fused together, and the foam shaped product obtained by this process may be inferior in mechanical strength. If steam at a high temperature is used to promote fusion of foamed particles, shrinkage caused by breakage of foam membranes would occur and characteristics such as lightweightness and heat insulating property of resin foam shaped products would be impaired.

It would thus be helpful to provide polyamide-based resin pre-expanded particles which can serve as a raw material of a polyamide-based resin foam shaped product having an excellent mechanical strength.

(Solution to Problem)

As a result of intensive studies for solving the problem, the present inventors have found that the above-mentioned problem can be solved by setting the expansion ratio ($\rho 1/\rho 2$) which is the ratio of the density $\rho 1$ (g/cm$^3$) to the density $\rho 2$ (g/cm$^3$) after being pressurized with air at 0.9 MPa and then heated for 30 seconds with saturated steam at a temperature higher than the thermal fusion temperature by 5 °C, to a predetermined range, to thereby complete the present disclosure.

Specifically, the present disclosure is as follows.

(1) Polyamide-based resin pre-expanded particles characterized by the following (A) or (B):

(A) the polyamide-based resin pre-expanded particles comprising

a polyamide-based resin;
wherein the polyamide-based resin pre-expanded particles further comprise a base metal element in an amount from 10 mass ppm to 3000 mass ppm with respect to 100 mass% of the polyamide-based resin, and wherein the polyamide-based resin pre-expanded particles have an expansion ratio of 1.0 or more, the expansion ratio being a ratio ($\rho 1/\rho 2$) of a density $\rho 1$ (g/cm$^3$) to a density $\rho 2$ (g/cm$^3$) after being pressurized with air at 0.9 MPa and then heated for 30 seconds with saturated steam at a temperature higher than a thermal fusion temperature by 5 °C;

(B) the polyamide-based resin pre-expanded particles comprising a polyamide-based resin,
wherein the polyamide-based resin pre-expanded particles having an expansion ratio B of 1.0 or more, the expansion ratio B being a ratio ($\rho 1/\rho 3$) of a density $\rho 1$ (g/cm$^3$) to a density $\rho 3$ (g/cm$^3$) after being pressurizing with air at 0.9 MPa and then heated for 30 seconds with saturated steam at a temperature higher than an extrapolated melting start temperature measured under water by 10 °C, the extrapolated melting start temperature measured under water being measured under the following Condition B using a differential scanning calorimeter:

Condition B:

in a second scan DSC curve obtained when the polyamide-based resin pre-expanded particles are sealed in a sealable pressure-resistant container made of aluminum while being immersed in pure water, heated to melt at a heating rate of 10 °C/min by the differential scanning calorimeter (DSC), subsequently cooled to solidify at a cooling rate of 10 °C/min, and heated to melt again at 10 °C/min by the differential scanning calorimeter (DSC), when a straight line approximating a DSC curve on a high temperature side relative to a maximum endothermic peak after an end of melting is used as a baseline, the extrapolated melting start temperature measured under water is defined as a temperature at an intersection point between a tangent line at an inflection point on a low temperature side relative to the maximum endothermic peak and the baseline

and wherein a peak temperature of a maximum endothermic peak is 150 °C or higher and 255 °C or lower in a DSC curve measured under the following Condition A using a differential scanning calorimeter, and a width of the maximum endothermic peak is 25 °C or greater and 80 °C or smaller when a straight line approximating the DSC curve on a high temperature side relative to the maximum endothermic peak after an end of melting is used as a baseline, the width corresponding to a difference between an extrapolated melting start temperature which is a temperature at an intersection point between a tangent line at an inflection point of the maximum endothermic peak on a low temperature side and the baseline, and an extrapolated melting end temperature which is a temperature at an intersection point between a tangent line at an inflection point of the maximum endothermic peak on a high temperature side and the baseline,

Condition A:
the DSC curve is obtained when being heated from 30 °C to 280 °C under a condition of a heating rate of 10 °C/min.

(2) The polyamide-based resin pre-expanded particles according to (1), wherein the particles characterized by (B) further comprises a base metal element in an amount from 10 mass ppm to 3000 mass ppm with respect to 100 mass% of the polyamide-based resin.

(3) The polyamide-based resin pre-expanded particles according to (2), wherein the base metal element is copper element or zinc element.

(4) The polyamide-based resin pre-expanded particles according to (2) or (3), further comprising iodine element in an amount from 10 mass ppm to 6000 mass ppm with respect to 100 mass% of the polyamide-based resin, wherein a molar ratio of iodine element to the base metal element (iodine element / base metal element) is 1 or more.

(5) The polyamide-based resin pre-expanded particles according to any one of (1) to (4), wherein the polyamide-based resin has:

a number average molecular weight Mn of 10,000 or more and 35,000 or less, and
a weight average molecular weight Mw of 35,000 or more and 140,000 or less, the number average molecular weight Mn and the weight average molecular weight Mw being measured by:

dissolving the sample in hexafluoroisopropanol (+ 10 mmol/L of sodium trifluoroacetate) to prepare a 0.2-w/v% sample solution,
filtering this sample solution through a membrane filter (0.2 $\mu$m) and injecting 10 $\mu$L of the filtered sample solution into a GPC (Shodex GPC-104) and detecting the eluted solution by an RI detector, using the following elution conditions: eluent: hexafluoroisopropanol (+ 10mmol/L of sodium trifluoroacetate), columns: two Shodex GPC LF-404 columns which were connected, column temperature: 40 °C, and flow rate: 0.3mL/min,
preparing a calibration curve in advance using solutions of PMMA having known molecular weights,

determining the number average molecular weight Mn and the weight average molecular weight Mw in terms of PMMA from the obtained chromatogram on the basis of the calibration curve.

(6) The polyamide-based resin pre-expanded particles according to any one of (1) to (5), wherein a sum of an acid value and an amine value measured by a potentiometric titration method (acid value + amine value) of the polyamide-based resin is 2.5 mg KOH/g or more and 8.0 mg KOH/g or less.

(7) The polyamide-based resin pre-expanded particles according to any one of (1) to (6), wherein for the polyamide-based resin pre-expanded particles characterized according to (A)

a peak temperature of a maximum endothermic peak is 150 °C or higher and 255 °C or lower in a DSC curve measured under the following Condition A using a differential scanning calorimeter, and
a width of the maximum endothermic peak is 25 °C or greater and 80 °C or smaller when a straight line approximating the DSC curve on a high temperature side relative to the maximum endothermic peak after an end of melting is used as a baseline, the width corresponding to a difference between an extrapolated melting start temperature which is a temperature at an intersection point between a tangent line at an inflection point of the maximum endothermic peak on a low temperature side and the baseline, and an extrapolated melting end temperature which is a temperature at an intersection point between a tangent line at an inflection point of the maximum endothermic peak on a high temperature side and the baseline,

Condition A:

the DSC curve is obtained when being heated from 30 °C to 280 °C under a condition of a heating rate of 10 °C/min.

(8) The polyamide-based resin pre-expanded particles according to any one of (1) to (7), wherein the peak temperature of the maximum endothermic peak is 150 °C or higher and 215 °C or lower in a DSC curve measured under the Condition A using a differential scanning calorimeter.

(9) The polyamide-based resin pre-expanded particles according to any one of (1) to (8), wherein the polyamide-based resin comprises a polyamide-based resin (A) and a polyamide-based resin (B) having a melting point high than a melting point of the polyamide-based resin (A).

(10) The polyamide-based resin pre-expanded particles according to (9), wherein a mass ratio of the polyamide-based resin (B) to 100 parts by mass of the polyamide-based resin (A) is 20 parts by mass or less.

(11) The polyamide-based resin pre-expanded particles according to any one of (1) to (10), comprising 50 mass% or more of a crystalline polyamide resin with respect to 100 mass% of the polyamide-based resin.

(12) The polyamide-based resin pre-expanded particles according to (11), wherein the crystalline polyamide resin is an aliphatic polyamide resin.

(13) The polyamide-based resin pre-expanded particles according to any one of (1) to (12), wherein

in a second scan DSC curve obtained using a differential scanning calorimeter under the following Condition B, a molten crystal ratio at a temperature higher than an extrapolated melting start temperature by 10 °C is 20% or more, the extrapolated melting start temperature being defined, when a straight line approximating a DSC curve on a high temperature side relative to a maximum endothermic peak after an end of melting is used as a baseline, as a temperature at an intersection point between a tangent line at an inflection point on a low temperature side relative to the maximum endothermic peak and the baseline,

Condition B:

a second DSC curve is defined as a DSC curve obtained when the polyamide-based resin pre-expanded particles are sealed in a sealable pressure-resistant container made of aluminum while being immersed in pure water, heated to melt at a heating rate of 10 °C/min by the differential scanning calorimeter (DSC), subsequently cooled to solidify at a cooling rate of 10 °C/min, and heated to melt again at 10 °C/min by the differential scanning calorimeter (DSC).

(14) A polyamide-based resin foam shaped product produced from the polyamide-based resin pre-expanded particles according to any one of (1) to (13).

(15) A method of producing a polyamide-based resin foam shaped product, comprising:

loading the polyamide-based resin pre-expanded particles according to any one of (1) to (13) in a cavity of a mold; and

supplying steam at a temperature equal to or lower than a melting point of the polyamide-based resin pre-expanded particles into the cavity to cause expansion and thermal fusion of the polyamide-based resin pre-expanded particles.

(Advantageous Effect)

According to the present disclosure, polyamide-based resin pre-expanded particles can be provided which can serve as a raw material of a polyamide-based resin foam shaped product having an excellent mechanical strength.

BRIEF DESCRIPTION OF THE DRAWINGS

In the accompanying drawings:

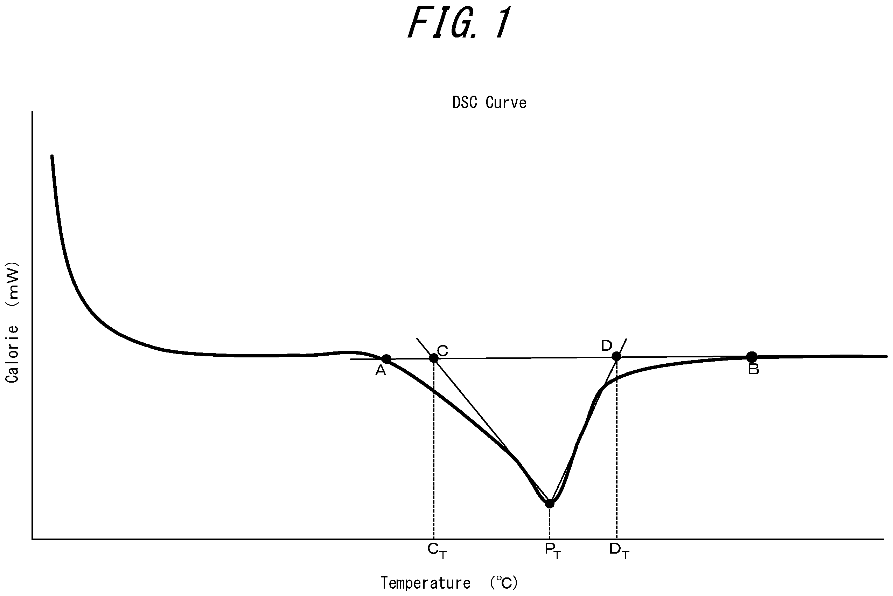

FIG. 1 is a diagram illustrating an example of a DSC curve of polyamide-based resin pre-expanded particles of the present disclosure obtained when being heated from 30 °C to 280 °C under a condition of a heating rate of 10 °C/min using a differential scanning calorimeter.

DETAILED DESCRIPTION

The following provides a detailed description of an embodiment of the present disclosure (hereinafter, referred to as the "present embodiment"). However, the following embodiment is merely an example provided for explanation. The disclosed products and methods are not limited to the following embodiment and various modifications may be made within the essential scope thereof in implementation.

[Polyamide-based resin pre-expanded particles]

Polyamide-based resin pre-expanded particles of the present embodiment contain a polyamide-based resin, wherein the polyamide-based resin pre-expanded particles have an expansion ratio of 1.0 or more, the expansion ratio being a ratio ($\rho 1/\rho 2$) of a density $\rho 1$ (g/cm$^3$) to a density $\rho 2$ (g/cm$^3$) after being pressurized with air at 0.9 MPa and then heated for 30 seconds with saturated steam at a temperature higher than a thermal fusion temperature by 5 °C.

Polyamide-based resin pre-expanded particles of another embodiment contain a polyamide-based resin, wherein the polyamide-based resin pre-expanded particles have an expansion ratio B, the expansion ratio B being a ratio ($\rho 1/\rho 3$) of a density $\rho 1$ (g/cm$^3$) to a density $\rho 3$ (g/cm$^3$) after being pressurizing with air at 0.9 MPa and then heated for 30 seconds with saturated steam at a temperature higher than an extrapolated melting start temperature B measured under water by 10 °C, the extrapolated melting start temperature B measured under water being measured under the following Condition B using a differential scanning calorimeter:

Condition B:

in a second scan DSC curve obtained when the polyamide-based resin pre-expanded particles are sealed in a sealable pressure-resistant container made of aluminum while being immersed in pure water, heated to melt at a heating rate of 10 °C/min by the differential scanning calorimeter (DSC), subsequently cooled to solidify at a cooling rate of 10 °C/min, and heated to melt again at 10 °C/min by the differential scanning calorimeter (DSC), when a straight line approximating a DSC curve on a high temperature side relative to a maximum endothermic peak after an end of melting is used as a baseline, the extrapolated melting start temperature measured under water is defined as a temperature at an intersection point between a tangent line at an inflection point on a low temperature side relative to the maximum endothermic peak and the baseline. Examples of the polyamide-based resin pre-expanded particles having an expansion ratio and/or an expansion ratio B of 1.0 or more include, for example: (i) polyamide-based resin pre-expanded particles containing a base metal element contained in an amount from 10 mass ppm to 3000 mass ppm with respect to 100 mass% of the polyamide-based resin; (ii) polyamide-based resin pre-expanded particles having a peak temperature of the maximum endothermic peak of 150 °C or higher and 275 °C or lower on a DSC curve obtained while being heated from 30 °C to 280 °C under a condition of a heating rate of 10 °C/min using a differential scanning calorimeter, wherein the width of the maximum endothermic peak is 30 °C or greater and 80 °C or smaller when a straight line approximating the DSC curve on the high temperature side relative to the maximum endothermic peak after an end of melting is used as a baseline, the width corresponding to the difference between the extrapolated melting start temperature which is the temperature at the intersection point between the tangent line at the inflection point on the low temperature side relative to the maximum endothermic peak and the baseline, and the extrapolated melting end temperature which is the temperature at the intersection point between the tangent line at the inflection point of the maximum endothermic peak on the high temperature side and the baseline; (iii) polyamide-based resin pre-expanded particles containing 50 mass% or more of a crystalline polyamide resin with respect to 100 mass% of the polyamide-based resin; and (iv) polyamide-based resin pre-expanded particles of a combination of two or more of the above (i) to (iii).

In the present embodiment (e.g., the embodiments of (1) to (13) described above, for example), the polyamide-based resin pre-expanded particles are pre-expanded particles obtained by foaming a polyamide-based resin composition containing a polyamide-based resin. The polyamide-based resin composition contains the polyamide-based resin, and may further contain optional components.

Here, the term "pre-expanded particles" refers to resin particles (e.g. beads) which have a porous structure formed by foaming of a polyamide-based resin composition, and have not been subjected to a final stage of foaming so as to have expandability. For example, they can be used as a raw material of a polyamide-based resin foam shaped product.

(Polyamide-based resin)

In the present embodiment (e.g., the embodiments of (1) to (13) described above, for example), examples of the polyamide-based resin include a polyamide homopolymer, a polyamide copolymer, and a mixture of these, for example.

Examples of the polyamide homopolymer that can be used include those obtained through polycondensation of a diamine and a dicarboxylic acid, such as polyamide 66, polyamide 610, polyamide 612, polyamide 46, and polyamide 1212, and those obtained through lactam ring-opening polymerization, such as polyamide 6 and polyamide 12.

Examples of the polyamide copolymer that can be used include polyamide 6/66, polyamide 66/6, polyamide 66/610, polyamide 66/612, polyamide 66/6T (T represents a terephthalic acid component), polyamide 66/6I (I represents an isophthalic acid component), and polyamide 6T/6I.

Of these examples, aliphatic polyamides are preferable, and polyamide 6, polyamide 66, polyamide 6/66, polyamide 66/6 are more preferable.

One of these may be used individually, or two or more of these may be used in combination as a mixture.

In the present embodiment (e.g., the embodiments of (1) to (13) described above, for example), the polyamide-based resin preferably contains two or more polyamide-based resins having different melting points. Among such examples, it is preferable that a polyamide-based resin (A) and a polyamide-based resin (B) having a melting point high than that of the polyamide-based resin (A) are contained from a viewpoint that the optimum temperature range of bead foam molding by means of steam is extended, thereby improving the fusibility of particles and increasing the foam magnification during molding, so that a foam shaped product having further excellent mechanical properties is obtained. As a result, it is possible to achieve a width of the maximum endothermic peak corresponding to the difference between the extrapolation melting start temperature and the extrapolated melting end temperature of 25 °C or greater and 80 °C or smaller, which enables the polyamide-based resin pre-expanded particles to be expanded sufficiently upon foam molding.

In the present embodiment (e.g., the embodiments of (1) to (13) described above, for example), the difference between the melting points of the polyamide-based resin (A) and the polyamide-based resin (B) is preferably 5 °C or greater from a viewpoint that the optimum temperature range of bead foam molding by means of steam is extended, thereby increasing the expansion ratio, so that a foam shaped product having further excellent mechanical properties is obtained, and is more preferably from 10 °C to 70 °C and even more preferably from 15 °C to 50 °C from a viewpoint of improving the extrusion stability upon extrusion molding of the polyamide-based resin pre-expanded particles.

In the case where three or more polyamide-based resins are contained, a polyamide-based resin having the lowest melting point may be used as the polyamide-based resin (A), and a polyamide-based resin having the highest melting point may be used as the polyamide-based resin (B).

The combination of the polyamide-based resin (A) and polyamide-based resin (B) may be, for example, a mixture including a combination of the polyamide homopolymer and/or the polyamide copolymer described above, and examples include a combination of polyamide 6 and polyamide 66, a combination of polyamide 6 and polyamide 612, a combination of polyamide 6 and polyamide 610, a combination of polyamide 6 and polyamide 6T, a combination of polyamide 6 and polyamide 6I, a combination of polyamide 612 and polyamide 66, a combination of polyamide 66 and polyamide 6T, a combination of polyamide 66 and polyamide 6I, and a combination of polyamide 6/66 and polyamide 6, a combination of polyamide 6/66 and polyamide 66, and a combinations of two different types of polyamide 6/66. Among these, the polyamide-based resin (A) is preferably polyamide 6/66, the polyamide-based resin (B) is preferably polyamide 6 or polyamide 6/66, and a preferred combination is a combination of polyamide 6/66 as the polyamide-based resin (A) and polyamide 6 as the polyamide-based resin (B). Such a combination increases the crystallinity of a foam shaped product, so that sufficient heat resistance and fusion rate are achieved.

Note that the polyamide-based resin may be a mixture including only a combination of the polyamide-based resin (A) and the polyamide-based resin (B) described above, or may be a mixture containing still another polyamide-based resin in addition to the combination of the polyamide-based resin (A) and the polyamide-based resin (B).

In the present embodiment (e.g., the embodiments of (1) to (13) described above, for example), the mass ratio of the polyamide-based resin (A) in the polyamide-based resin composition (taken to be 100 mass%) is preferably from 50 mass% to 99.5 mass%, and more preferably from 80 mass% to 99 mass%. Further, the mass ratio of the polyamide-based resin (A) in the polyamide-based resin pre-expanded particles (taken to be 100 mass%) is preferably from 50 mass% to 99.5 mass%, and more preferably from 80 mass% to 99 mass%.

In the present embodiment (e.g., the embodiments of (1) to (13) described above, for example), the mass ratio of the polyamide-based resin (B) in the polyamide-based resin composition (taken to be 100 mass%) is preferably from 0.1 mass% to 50 mass%, and more preferably from 0.5 mass% to 10 mass%. Further, the mass ratio of the polyamide-based resin (B) in the polyamide-based resin pre-expanded particles (taken to be 100 mass%) is preferably from 0.1 mass% to 50 mass%, and more preferably from 0.5 mass% to 10 mass%.

From a viewpoint of suppressing thermal degradation of the resin by lowering the temperature upon extrusion molding to thereby improve the extrusion stability upon extrusion molding, the mass ratio of the polyamide-based resin (A) in the polyamide-based resin composition (taken to be 100 mass%) is preferably higher, more preferably higher by 30 mass% or more, and even more preferably higher by 60 mass% or more, than the mass ratio of the polyamide-based resin (B) in the polyamide-based resin composition (taken to be 100 mass%). In addition, from the similar viewpoint, the mass ratio of the polyamide-based resin (A) in the polyamide-based resin pre-expanded particles (taken to be 100 mass%) is preferably higher, more preferably higher by 30 mass% or more, and even more preferably higher by 60 mass% or more, than the mass ratio of the polyamide-based resin (B) in the polyamide-based resin pre-expanded particles (taken to be 100 mass%).

In the present embodiment (e.g., the embodiments of (1) to (13) described above, for example), the polyamide-based resin composition preferably has a mass ratio of the polyamide-based resin (B) of 20 parts by mass or less, more preferably 0.5 parts by mass to 20 parts by mass, and even more preferably from 1 parts by mass to 10 parts by mass, to 100 parts by mass of the polyamide-based resin (A). When the mass ratio is within one of the above ranges, the crystallinity of a foam shaped product is increased, so that sufficient heat resistance and fusion rate are achieved.

In addition, the polyamide-based resin pre-expanded particles have a mass ratio of the polyamide-based resin (B) of preferably 20 parts by mass or less, more preferably 0.5 parts by mass to 20 parts by mass, and even more preferably from 1 parts by mass to 10 parts by mass, to 100 parts by mass of the polyamide-based resin (A).

In cases where a foam shaped product is required to have an excellent lightweightness, an amorphous polyamide resin is preferably included from a viewpoint that inclusion of a foaming agent such as carbon dioxide gas or hydrocarbon is facilitated to thereby reduce the density of the foam shaped product. In this case, the content ratio of the amorphous polyamide resin in the polyamide-based resin composition is preferably less than 50 mass%, and more preferably less than 30 mass%, with respect to 100 mass% of the polyamide-based resin. In addition, the content ratio of the amorphous polyamide resin in the polyamide-based resin pre-expanded particles is preferably less than 50 mass%, and more preferably less than 30 mass%, with respect to 100 mass% of the polyamide-based resin.

In the present embodiment (e.g., the embodiments of (1) to (13) described above, for example), the polyamide-based resin composition preferably contains 50 mass% or more of a crystalline polyamide resin with respect to 100 mass% of the polyamide-based resin, from a viewpoint of achieving an expansion ratio and/or an expansion ratio B, which will be described later, of 1.0 or more, from a viewpoint of suppressing shrinkage caused by breakage of foam membranes even at temperatures at which fusion of the foamed particles proceeds sufficiently to thereby produce a polyamide-based resin foam shaped product having a high expansion ratio and having excellent heat resistance and mechanical strength, and from a viewpoint of lowering the viscosity of the polyamide-based resin composition in a high temperature environment during foam molding, to thereby promote mutual diffusion of the resin between foamed particles, and improve the fusibility and improve the mechanical strength of a shaped article. When the heat resistance, the chemical resistance, the oil resistance, and the lightweightness of a foam shaped product are required to be well-balanced, a crystalline polyamide resin is contained in an amount of preferably 50 mass% or more and more preferably 70 mass% or more, with respect to 100 mass% of the polyamide-based resin. In addition, in the polyamide-based resin pre-expanded particles, the crystalline polyamide resin is contained in an amount of preferably contain 50 mass% or more and more preferably 70 mass% or more, with respect to 100 mass% of the polyamide-based resin.

Further, the crystalline polyamide resin is preferably a crystalline aliphatic polyamide resin, and it is more preferable that the crystalline aliphatic polyamide resin is contained in an amount of 50 mass% or more with respect to 100 mass% of the polyamide-based resin.

The term "crystalline polyamide" in the present embodiment refers to a polyamide which is a polymer having amide bonds (-NHCO-) in the main chain and has a melting calorie determined by a differential scanning calorimeter (DSC) of 1 J/g or more, preferably 10 J/g or more, more preferably 15 J/g or more, and most preferably 20 J/g or more. The measurement by the differential scanning calorimeter (DSC) can be specifically made using Type DSC-7 manufactured by PerkinElmer Inc. More particularly, it can be determined from the peak area of an endothermic peak (melting peak) which is obtained when 8 mg of a sample is kept at 300 °C for 2 minutes under a nitrogen atmosphere, cooled to 40 °C at a temperature lowering rate of 20 °C/min, kept at 40 °C again for 2 minutes, and then heated at a temperature raising rate of 20 °C/min. Further, the term "amorphous polyamide" refers to a polyamide having a melting calorie of less than 1 J/g when a measurement is carried out under the above-described condition.

In the present embodiment (e.g., the embodiments of (1) to (13) described above, for example), when the polyamide-based resin is a mixture of polyamide-based resins, from a viewpoint of increasing the crystallinity of a foam shaped product to thereby achieve a sufficient heat resistance, the polyamide-based resin composition preferably contains an aliphatic polyamide in an amount of more than 50 mass%, more preferably 60 mass% or more, even more preferably 70 mass% or more, and particularly preferably 75 mass% or more, with respect to 100 mass% of the polyamide-based resin. In addition, from the similar viewpoint, the polyamide-based resin pre-expanded particles contains an aliphatic polyamide in an amount of preferably more than 50 mass%, more preferably 60 mass% or more, even more preferably 70 mass% or more, and particularly preferably 75 mass% or more, with respect to 100 mass% of the polyamide-based resin.

In the present embodiment (e.g., the embodiments of (1) to (13) described above, for example), the melting point of the polyamide-based resin is preferably 150 °C or higher, and more preferably 180 °C or higher from a viewpoint of providing a foam shaped product with sufficient heat resistance, and is preferably 270 °C or lower, and more preferably 250 °C or lower from a viewpoint of improving the fusion rate of pre-expanded particles in a shaping process of the foam shaped product.

As used therein, the melting point of the polyamide-based resin is a value measured in accordance with JIS K7121 by differential scanning calorimetry (DSC). Peaks appearing in measurement that indicate heat absorption are determined to be peaks that indicate melting of the resin and the melting point is determined to be the temperature corresponding to a peak indicating heat absorption that appears at a highest temperature.

The measurement device that is used may be a commercially available differential scanning calorimeter such as

8

DSC 7 manufactured by PerkinElmer Inc.

The measurement conditions may be commonly used conditions. For example, an inert gas atmosphere may be adopted and, in terms of temperature conditions, the resin may be held at a temperature higher than the melting point thereof, may be subsequently cooled rapidly to approximately room temperature at 20 °C/min, and may then be heated to higher than the melting point thereof at 20 °C/min.

High-reactivity functional groups at ends of the polyamide-based resin (i.e., amino groups and carboxyl groups) may be converted to low-reactivity functional groups through addition of an end-capping agent in synthesis of the polyamide-based resin (i.e., through end-capping of the polyamide-based resin).

In a situation in which an end-capping agent is added, the timing of addition may, for example, be at the time of charging of raw materials, the start of polymerization, a mid- to late-period of polymerization, or the end of polymerization.

No specific limitations are placed on the end-capping agent other than being a monofunctional compound capable of reacting with an amino group or a carboxyl group of the polyamide-based resin. Examples of end-capping agents that can be used include monocarboxylic acids, monoamines, acid anhydrides, monoisocyanates, monoacid halides, monoesters, and monoalcohols. One of these may be used individually, or two or more of these may be used in combination.

In the present embodiment (e.g., the embodiments of (1) to (13) described above, for example), the acid value and the amine value of the polyamide-based resin may be 0 mg KOH/g or more, and are preferably 10 mg KOH/g or less and more preferably 5 mg KOH/g or less, from a viewpoint of preventing gelation and degradation while the molten polyamide-based resin resides, and from a viewpoint of preventing problems such as coloring and hydrolysis in the use environment of the resin.

The sum of the amine value and the acid value (acid value + amine value) of the polyamide-based resin is preferably 2.5 mg KOH/g or more and 8.0 mg KOH/g or less, more preferably 3.0 mg KOH/g to 6.5 mg KOH/g, and even more preferably 3.5 mg KOH/g to 5.5 mg KOH/g, from a viewpoint of enhancing interactions between the polyamide-based resin and the base metal compound, and further suppressing shrinkage caused by breakage of foam membranes even at temperatures at which fusion of the pre-expanded particles proceeds sufficiently, to thereby provide a higher expansion ratio.

The amine value and the acid value may equal or may be different from each other.

Note that the amine value and the acid value can be measured by methods described in Examples below. Further, the acid value and the amine value of the polyamide-based resin can be adjusted by changing the molecular weight of the polyamide-based resin or using the end-capping agent such as those described above.

In the present embodiment (e.g., the embodiments of (1) to (13) described above, for example), the saturated water absorption (at 23 °C and 100% RH) of the polyamide-based resin is preferably 3% or more from the viewpoint that the polyamide-based resin pre-expanded particles can exhibit an excellent fusibility after the pre-expanded particles are subjected to a moisturizing treatment when the saturated water absorption is within this range. The saturated water absorption is more preferably 6% or more.

In the present embodiment (e.g., the embodiments of (1) to (13) described above, for example), the number average molecular weight Mn of the polyamide-based resin is preferably 35,000 or less from a viewpoint of lowering the viscosity of the polyamide-based resin in a high temperature environment during foam molding, to thereby promote mutual diffusion of the resin between foamed particles, and improve the fusibility and improve the mechanical strength of a shaped article, and is preferably 10,000 or more from a viewpoint of making the three-dimensional network of the polymer chains to be retained even in a high temperature environment upon foam molding, to thereby enhance the strength of foam membranes and suppress breakage of foams. It is more preferably 12,000 to 27,000, even more preferably 15,000 to 30,000, and particularly preferably 16,000 to 26,000.

In addition, the weight average molecular weight Mw of the polyamide-based resin is preferably 140,000 or less from a viewpoint of lowering the viscosity of the polyamide-based resin in a high temperature environment upon foam molding, to thereby promote mutual diffusion of the resin between foamed particles, and improve the fusibility and improve the mechanical strength of a shaped article, and is preferably 35,000 or more from a viewpoint of making the three-dimensional network of the polymer chains to be retained even in a high temperature environment upon foam molding, to thereby enhance the strength of foam membranes and suppress breakage of foams. It is more preferably 40,000 to 125,000, even more preferably 60,000 to 120,000, and particularly preferably 65,0000 to 120,000.

The number average molecular weight Mn and the weight average molecular weight Mw can be measured by methods described in Examples below.

(Optional components)

The polyamide-based resin composition and/or the polyamide-based resin pre-expanded particles of the present embodiment may further contain optional components.

Examples of the optional additive components include a base metal element-containing compound; an elementary iodine-containing compound; and additive components such as a stabilizer, a flame retardant, a bubble modifier, a modifier, an impact modifier, a lubricant, a pigment, a dye, a weather resistance improver, an antistatic agent, an impact resistance modifier, a crystal nucleating agent, glass beads, an inorganic filler, a crosslinking agent, a nucleating agent such as talc, and other thermoplastic resins.

- Base metal-containing compound(s) -

Examples of a base metal element include elements such as iron, copper, nickel, lead, zinc, tin, tungsten, molybdenum, tantalum, cobalt, bismuth, cadmium, titanium, zirconium, antimony, manganese, beryllium, chromium, germanium, vanadium, gallium, hafnium, indium, niobium, rhenium, and thallium. From viewpoints of the moldability improving effect, the cost, and the toxicity, copper element or zinc element is preferred.

In the present embodiment (e.g., the embodiments of (1) to (13) described above, for example), the content of a base metal element is from 10 mass ppm to 3000 mass ppm with respect to 100 mass% of the polyamide-based resin. The content is more preferably 20 mass ppm or more, and even more preferably 30 mass ppm or more. Further, the content is more preferably 2500 mass ppm or less, and even more preferably 2000 mass ppm or less. When the content of the base metal element is 10 mass ppm or more, reduction in and deviation of the density caused by shrinkage can be suppressed during in-mold molding, and when the content is 20 mass ppm or more, the thermal stability can be further improved. When the content of the base metal element is 3000 mass ppm or less, the base metal element-containing compound becomes less likely to aggregate during melt-kneading, and breakage of foam membranes caused by aggregation of the base metal element-containing compound and appearance defects of the foamed particles become less likely to occur.

Note that the type of base metal element in the polyamide-based resin composition and/or in the polyamide-based resin pre-expanded particles can be identified by X-ray fluorescence. Further, the mass ratio of the base metal element can be measured by inductively coupled plasma atomic emission spectroscopy (ICP-AES), and can be specifically measured by a method described in Examples below.

The compound which serves as a source of the base metal element is not particularly limited as long as it is a compound containing the base metal element, and examples thereof include salts such as a metal halide and a metal acetate, and ionomers such as an ethylene-unsaturated carboxylic acid metal salt copolymer.

Note that, in this specification, the compound which serves as a source of a base metal element may be referred to as a "base metal element-containing compound".

- Elementary iodine-containing compound -

In the present embodiment (e.g., the embodiments of (1) to (13) described above, for example), the content of iodine element is preferably from 10 mass ppm to 6000 mass ppm with respect to 100 mass% of the polyamide-based resin. Further, the content is more preferably 100 mass ppm or more, and even more preferably 1000 mass ppm or more. When the content of iodine element is 10 mass ppm or more, reduction in the density caused by shrinkage during molding can be suppressed, and when the content is 100 mass ppm or more, the thermal stability is further improved. The content of iodine element is preferably 6000 mass ppm or less, more preferably 5000 mass ppm or less, and even more preferably 4000 mass ppm or less, from a viewpoint of the colorability.

The content of iodine element in the polyamide-based resin composition and/or the polyamide-based resin pre-expanded particles can be measured by ion chromatography, and specifically can be measured by a method described in Examples below.

In the present embodiment (e.g., the embodiments of (1) to (13) described above, for example), the molar ratio (iodine element / base metal element(s)) of iodine element to the base metal element(s) in the polyamide-based resin composition and/or the polyamide-based resin pre-expanded particles is preferably 1.0 or more, and more preferably 3.0 or more. When the molar ratio is 1.0 or more, the formability can be improved, and when molar ratio is 3.0 or more, a foam shaped product further excellent in the thermal stability can be produced.

Here, the molar ratio of iodine element to the base metal element(s) refers to the value determined as follows. Specifically, the mass concentration $m_x$ of a base metal element measured by ICP-AES is divided by the atomic weight of that element to determine the molar concentration (x) of the base metal element. The molar concentrations of all base metal elements detected by X-ray fluorescence is summed to thereby determine the molar concentration (M) of all the base metal elements. Similarly, the mass concentration $m_2$ of iodine element measured by ion chromatography is divided by the atomic weight of iodine to determine (I). The value (I)/(M) obtained by dividing (I) by (M) is defined as the molar ratio of iodine element to the base metal element(s).

For example, when copper element is the only base metal element, the value (Cu) is obtained by dividing the mass concentration of the copper element measured by ICP-AES by the atomic weight of copper, and the value (I) is divided by (Cu) to obtain (I) / (Cu)

The compound which serves as a source of iodine element is not particularly limited as long as it is a compound containing iodine element, and examples thereof include an alkali metal salt such as potassium iodide and sodium iodide, and an ammonium salt such as tetrabutylammonium iodide.

Note that, in this specification, a compound which serves as a source of iodine element may be referred to as an "iodine element-containing compound".

Such base metal element-containing compound and/or iodine element-containing compound may be added, but are not particularly limited, by a known melt-kneading method, and examples thereof include a melt-kneading method using an extruder. At this time, the base metal element-containing compound and the iodine element-containing compound may be dry-blended directly into the polyamide-based resin serving as the raw material. From a viewpoint of improving workability, however, a master batch containing the base metal element-containing compound and a master batch containing the iodine element-containing compound or a master batch containing both the base metal element-containing compound and the iodine element-containing compound are preferably blended and melt-kneaded.

The extruder can be a single screw extruder provided with one screw or a twin screw extruder provided with two screws. The twin screw extruder used may be either of a twin screw extruder having two screws which rotate in the same direction, or a twin screw extruder having two screws which rotate in different directions.

The setting temperature of the cylinder during melt-kneading is not particularly limited as long as the temperature is equal to or higher than the melting point of the polyamide-based resin, and is within a range of 200 °C to 340 °C, for example. The temperature is more preferably within a range of 200 °C to 300 °C. It is preferable to melt-knead at a setting temperature of 200 °C or higher for maintaining the productivity, while it is preferable to melt-knead at a setting temperature of 290 °C or lower for suppressing thermal degradation of the polyamide-based resin. From a viewpoint of dispersibility of the base metal element-containing compound, a preferred setting temperature depends on the polyamide-based resin to be used, and it is desirable to melt-knead at a setting temperature higher than the melting point of the polyamide-based resin by 20 °C to 80 °C.

The resin temperature upon extrusion of the polyamide-based resin composition is affected by various factors, such as the setting temperature of the cylinder, the screw rotation speed, and the amount of the resin supplied. The temperature to melt the resin upon melt-kneading is preferably set to a temperature from 210 °C to 340 °C. The temperature is more preferably from 220 °C to 320 °C. This temperature is the actual temperature measured by a thermometer such as a contact-type thermocouple mounted inside a flange of the end of an extruder.

After melt-kneading, the resin is preferably extruded as strands by discharging from a die, water-cooled in a cooling bath, and cut into to a desired particle shape which is convenient for foaming. The particle shape of the polyamide-based resin composition is not particularly limited, and examples thereof include beads, pellets, spheres, and undefined pulverized shapes. The average particle size of the particle shape is preferably from 0.5 mm to 4.0 mm, and more preferably from 0.5 mm to 2.5 mm, from a viewpoint of achieving an appropriate size of foamed particles after being expanded and facilitating handling of the foamed particles such that the particles are densely loaded upon molding. Note that the average particle size is determining by capturing images of arbitrary 20 particles of the polyamide-based resin composition under a microscope, drawing two straight lines passing through the center of each particle which are orthogonal to each other, and averaging the determined measured sizes. If the lengths of two straight lines of a particle are different, the longer one is used as the particle size of that particle.

- Additive component -

The term "additive component" refers to a compound other than the polyamide-based resin, the base metal element-containing compound, and the iodine element-containing compound described above.

Examples of the stabilizer that can be used include, but are not specifically limited to, organic antioxidants and heat stabilizers such as hindered phenol antioxidants, sulfuric antioxidants, phosphoric antioxidants, phosphite compounds, and thioether compounds; light stabilizers and ultraviolet absorbers such as those based on hindered amines, benzophenone, and imidazole; and metal deactivators. One of these may be used individually, or two or more of these may be used in combination.

A copper compound is preferably used as the heat stabilizer from a viewpoint of effectively preventing long-term heat aging in a high-temperature environment of 120 °C or higher. Moreover, a combination of the copper compound with an alkali metal halide compound is also preferable. Examples of alkali metal halide compounds that can be used include lithium chloride, lithium bromide, lithium iodide, sodium fluoride, sodium chloride, sodium bromide, sodium iodide, potassium fluoride, potassium chloride, potassium bromide, and potassium iodide. One of these may be used individually, or two or more of these may be used in combination.

The flame retardant is preferably, but not specifically limited to, a combination of a halogen-containing flame retardant and an antimony compound.

Examples of preferable halogen-containing flame retardants include brominated polystyrene, brominated polyphenylene ether, brominated bisphenol epoxy resin, brominated styrene-maleic anhydride copolymer, brominated epoxy resin, brominated phenoxy resin, decabromodiphenyl ether, decabromobiphenyl, brominated polycarbonate, perchlorocyclopentadecane, and brominated crosslinked aromatic polymers. Examples of preferable antimony compounds include antimony trioxide, antimony pentoxide, and sodium antimonate.

A combination of dibromopolystyrene and antimony trioxide is preferable as the flame retardant from a viewpoint of heat stability.

Non-halogen-containing flame retardants may also be used as flame retardants, specific examples of which include melamine cyanurate, red phosphorus, phosphinic acid metal salts, and nitrogen containing phosphoric acid compounds. In particular, a combination of a phosphinic acid metal salt and a nitrogen-containing phosphoric acid compound (for example, inclusive of a reaction product or mixture of polyphosphoric acid and melamine or a condensation product of melamine (melam, melon, etc.)) is preferable.

In cases where the average cell size of the polyamide-based resin pre-expanded particles needs to be adjusted, a cell modifier may be added. Examples of the cell modifier include inorganic nucleating agents such as talc, silica, calcium silicate, calcium carbonate, aluminum oxide, titanium oxide, diatomaceous earth, clay, sodium bicarbonate, alumina, barium sulfate, aluminum oxide, and bentonite. The amount of the cell modifier used is typically 0.005 parts by mass to 5 parts by mass relative to the total amount of raw materials of the polyamide-based resin pre-expanded particles.

The content of the additive component in the polyamide-based resin composition and/or in the polyamide-based resin pre-expanded particles may be 15 parts by mass or less, preferably 6 parts by mass or less, and more preferably 3 parts by mass or less, per 100 parts by mass of the polyamide-based resin.

In the present embodiment, the additive component may be added simultaneously with the base metal element-containing compound or the iodine element-containing compound, or may be added through separate melt-kneading before or after the step of adding the base metal element-containing compound or the iodine element-containing compound. More preferably, it is desirable that the additive component is melt-kneaded simultaneously with the base metal element-containing compound and the iodine element-containing compound in one twin screw extruder.

In the polyamide-based resin composition, a compound, or polymer including a substituent (hereinafter, also referred to as a reactive substituent) that reacts with an amino group or carboxyl group of the polyamide-based resin may be used to increase the degree of crosslinking of the resin through formation of a crosslinked structure via the substituent in molecule of the resin, as long as the object of the present disclosure is not impaired.

Examples of the reactive substituent include functional groups such as a glycidyl group, a carboxyl group, a carboxylic acid metal salt, an ester group, a hydroxyl group, an amino group, a carbodiimide group, and an acid anhydride group. In particular, a glycidyl group, an acid anhydride group, or a carbodiimide group is preferable from a viewpoint of rate of reaction. One of these may be used individually, or two or more of these may be used in combination. Moreover, the compound, or polymer may include more than one type of functional group in individual molecules thereof. The reactive substituent is preferably introduced into the resin in an amount that does not lead to gelation of the resin due to crosslinking.

(Properties)

Hereinafter, the properties of the polyamide-based resin pre-expanded particles of the present embodiment will be described.

In the present embodiment (e.g., the embodiments of (1) to (13) described above, for example), the expansion ratio of the polyamide-based resin pre-expanded particles is 1.0 or more, preferably 1.1 or more, and more preferably 1.2 or more, and may be 2.0 or less. Here, the expansion ratio is the ratio ($\rho 1/\rho 2$) of the density $\rho 1$ (g/cm$^3$) to the density $\rho 2$ (g/cm$^3$) after being pressurized with air at 0.9 MPa (for example, pressurized at 0.9 MPa for 24 hours) and then heated for 30 seconds with saturated steam at a temperature higher than a thermal fusion temperature by 5 °C.

When the expansion ratio is 1.0 or more, a foam shaped product having a satisfactory mechanical strength can be produced by loading the pre-expanded particles in a mold and heating them by steam to form the foam shaped product. Further, shrinkage caused by breakage of foam membranes can be suppressed, and a polyamide-based resin foam shaped product which is excellent in heat resistance and mechanical strength can be produced.

Note that the density $\rho 1$ may be the density of the polyamide-based resin pre-expanded particles before being pressured and heated and measuring $\rho 2$, for example, and may be the density of the polyamide-based resin pre-expanded particles not subjected to a pressure heating treatment after production.

The expansion ratio can be adjusted, for example, by addition of a heat stabilizer (e.g., addition of the base metal element-containing compound described above), use of a combination of polyamide-based resins of which difference in the melting point is within the preferred range mentioned above, use of a crystalline polyamide resin, use of polyamide-based resin pre-expanded particles having a water content of 0 mass% or more and 12 mass% or less.

The methods of measuring the thermal fusion temperature and the expansion ratio will be described in Examples below.

Further, in the case where saturated steam at a temperature higher than the thermal fusion temperature by 3 °C is used, the expansion ratio is preferably 1.0 or more, and may be 2.0 or less. Further, in the case where saturated steam at the thermal fusion temperature is used, the expansion ratio is preferably 1.0 or more, and may be 2.0 or less.

In the present embodiment (e.g., the embodiments of (1) to (13) described above, for example), the expansion ratio B of the polyamide-based resin pre-expanded particles is 1.0 or more, preferably 1.1 or more, and more preferably 1.2 or less, and may be 2.0 or less. Here, the expansion ratio B is the ratio ($\rho1/\rho3$) of the density $\rho1$ (g/cm$^3$) to the density $\rho3$ (g/cm$^3$) after being pressurizing with air at 0.9 MPa and then heated for 30 seconds with saturated steam at a temperature higher than an extrapolated melting start temperature B measured under water by 10 °C. The extrapolated melting start temperature B measured under water is measured under the following Condition B using a differential scanning calorimeter.

When the expansion ratio B is 1.0 or more, a foam shaped product having a satisfactory mechanical strength can be produced by loading the pre-expanded particles in a mold and heating them by steam to form the foam shaped product. Further, shrinkage caused by breakage of foam membranes can be suppressed, and a polyamide-based resin foam shaped product which is excellent in heat resistance and mechanical strength can be produced.

Note that the density $\rho1$ may be the density of the polyamide-based resin pre-expanded particles before being pressured and heated and measuring $\rho3$, for example, may be the density of the polyamide-based resin pre-expanded particles not subjected to a pressure heating treatment after production.

The expansion ratio B can be adjusted, for example, by addition of a heat stabilizer (e.g., addition of the base metal element-containing compound described above), use of a combination of polyamide-based resins of which difference in the melting point is within the above preferred range, use of a crystalline polyamide resin, use of polyamide-based resin pre-expanded particles having a water content of 0 mass% or more and 12 mass% or less.

The methods of measuring the extrapolated melting start temperature B and the expansion ratio B will be described in Examples below.

In addition, in the case where saturated steam at a temperature higher than the extrapolated melting start temperature B by 8 °C is used, the expansion ratio is preferably 1.0 or more, and may be 2.0 or less. In addition, in the case where saturated steam at the extrapolated melting start temperature B is used, the expansion ratio is preferably 1.0 or more, and may be 2.0 or less.

In the present embodiment (e.g., the embodiments of (1) to (13) described above, for example), a polyamide-based resin pre-expanded particle has a peak temperature of the maximum endothermic peak of 150 °C or higher and 255 °C or lower, more preferably 150 °C or higher and 215 °C or lower, more preferably 155 °C or higher and 220 °C or lower, and even more preferably 160 °C or higher and 200 °C or lower, in a DSC curve obtained when being heated from 30 °C to 280 °C under a condition of a heating rate of 10 °C/min (Condition A) using a differential scanning calorimeter. The peak temperature of the maximum endothermic peak within one of the above ranges facilitates foam molding using saturated vapor, which tends to be preferable in practical use.

In addition, in the polyamide-based resin pre-expanded particles of the present embodiment, in the DSC curve, the width of the maximum endothermic peak is 25 °C or greater and 80 °C or smaller, more preferably 28 °C or greater and 70 °C or smaller, even more preferably 35 °C or greater and 70 °C or smaller, and particularly preferably 40 °C or greater and 65 °C or smaller, when a straight line approximating the DSC curve on the high temperature side relative to the maximum endothermic peak after an end of melting is used as a baseline, the width corresponding to the difference between the extrapolated melting start temperature which is the temperature at the intersection point between the tangent line at the inflection point of the peak temperature of the maximum endothermic peak on the low temperature side and the baseline, and the extrapolated melting end temperature which is the temperature at the intersection point between the tangent line at the inflection point of the peak temperature of the maximum endothermic peak on the high temperature side and the baseline. When the width of the maximum endothermic peak is within one of the above ranges, the material strength is prevented from being reduced due to breakage of foams of the expanded particles while the fusing force among the expanded particles under the temperature condition is enhanced, which tends to improve the formability.

It is preferable that the polyamide-based resin pre-expanded particles have the peak temperature of the maximum endothermic peak in one of the above preferred ranges and the width of the maximum endothermic peak within one of the above ranges.

In cases where a plurality of endothermic peaks are present, the maximum endothermic peak is the peak where the heat absorption is maximized.

FIG. 1 is a diagram illustrating an example of a DSC curve of the polyamide-based resin pre-expanded particles of the present embodiment obtained when being heated from 30 °C to 280 °C under a condition of a heating rate of 10 °C/min using a differential scanning calorimeter. In FIG. 1, A is the intersection point between the DSC curve on the lower temperature side relative to the maximum endothermic peak and the baseline, B is the intersection point between the DSC curve on the higher temperature side relative to the maximum endothermic peak and the baseline, C is the intersection point between the tangent line at the inflection point on the lower temperature side relative to the maximum endothermic peak and the baseline, and D is the intersection point between the tangent line at the inflection point on the higher temperature side of the maximum endothermic peak and the baseline. $C_T$ is the extrapolated melting start temperature, $D_T$ is the extrapolated melting end temperature, and $P_T$ is the peak temperature of the maximum endothermic peak. The peak width corresponds to the difference obtained by subtracting $C_T$ from $D_T$.

In the present embodiment (e.g., the embodiments of (1) to (13) described above, for example), examples of the method of setting the peak temperature of the maximum endothermic peak to 150 °C or higher and 255 °C or lower (preferably 150 °C or higher and 215 °C or lower), and the width of the maximum endothermic peak to 25 °C or greater and 80 °C or smaller (preferably 28 °C or greater and 70 °C or smaller) include using two polyamide-based resins having different melting points (particularly, using them in the preferred embodiment described above), and adjusting the water content ratio of the polyamide-based resin pre-expanded particles (for example, adjusting the water content ratio to any of the preferred ranges described later), for example.

Performing a moisturizing treatment in advance so that the water content ratio of the polyamide-based resin pre-expanded particles is 3 mass% or more and 15 mass% or less can reduce the viscosity of the polyamide-based resin composition in a high temperature environment during foaming molding in the subsequent heat fusion step to thereby improve the fusibility of a shaped article, which in turn improves the mechanical strength, e.g., the bending breaking strength. This treatment is intended to increase the volume of bubbles in the polyamide-based resin expanded particles under the temperature condition during in-mold molding to expand the polyamide expanded particles, as well as decreasing the viscosity of the polyamide-based resin to promote the mutual diffusion of the resin between expanded particles.

When the water content ratio of the polyamide-based resin pre-expanded particles is more than 15 mass%, water condensates in closed cells inside the polyamide-based resin pre-expanded particles. The water absorbs heat as it vaporizes while being heated in in-mold foam molding. Because the condensed water inside the particles is heated by heat conducting from the outer surfaces of the expanded particles, the heating efficiency inside the polyamide-based resin pre-expanded particles is lower than heating efficiency of water adhered to the surfaces outside the polyamide-based resin pre-expanded particles which are directly heated by the latent heat of steam, which prevents the temperature of the polyamide-based resin pre-expanded particles from increasing during the in-mold foam molding. As a result, expansion of the polyamide-based resin pre-expanded particles becomes insufficient and fusion of expanded particles is inhibited due to the insufficient expansion, so that expanded particles are more likely to be separated from each other at the interfaces and sufficient bending breaking strength cannot be obtained. From this perspective, the water content ratio of the polyamide-based resin pre-expanded particles is preferably 15 mass% or less, and more preferably 12 mass% or less.

In addition, appropriate adjustment of the water content ratio of the polyamide-based resin pre-expanded particles can also reduce deviations in foam sizes in a shaped article. In the polyamide-based resin pre-expanded particles subjected to a moisturizing treatment, interactions between molecular chains caused by hydrogen bonds, which are observed in dry polyamide-based resin expanded particles, decrease. Thus, a change in the storage modulus at temperatures lower and higher than the glass transition temperature decreases, and the polyamide-based resin pre-expanded particles exhibit a uniform foaming behavior when the temperature abruptly changes during foam molding, which reduces deviation in particle sizes. Deviation in particle sizes may cause voids in the shaped article, which may reduce the mechanical strength. From such viewpoints, in the present embodiment (e.g., the embodiments of (1) to (13) described above, for example), the water content ratio of the polyamide pre-expanded particles is preferably 0 mass% or more, more preferably more than 0 mass%, even more preferably 3 mass% or more, still even more preferably 4.5 mass% or more, and particularly preferably 6 mass% or more.

The water content ratio of the polyamide-based resin pre-expanded particles is calculated from the mass of the polyamide-based resin pre-expanded particles (W0), the mass (W1) after water adhered to surfaces of the polyamide-based resin pre-expanded particles is removed, and the mass (W2) after the polyamide-based resin pre-expanded particles are dried at 80 °C in vacuum for 6 hours. The water content ratio (mass %) is calculated as follows: water content ratio = (W1 - W2) / W2 × 100

In addition, for calculating the water content ratio of the polyamide-based resin pre-expanded particles having a hollow portion or a recessed external shape, a high-pressure gas can be used to remove water adhered to the surfaces of the hollow portion or the recessed external shape. For example, the air or another gas adjusted to a blow speed of 100 m/sec or more can be suitably used.

The water content ratio of the polyamide-based resin pre-expanded particles can be adjusted by immersing the polyamide-based resin pre-expanded particles in warm water in a moisturizing treatment. Hot water at 40 °C or higher in the moisturizing treatment can increase the moisturizing speed, to thereby increase the efficiently of moisturizing. In addition, from the viewpoint of suppressing deformation of the pre-expanded particles at temperatures equal to or greater than the glass transition point, a moisturizing treatment is preferably performed at 70 °C or lower. In addition, the time for moisturizing the polyamide-based resin pre-expanded particles is preferably within 30 minutes and more preferably within 15 minutes, from the viewpoint of suppressing elution of additives inside the polyamide-based resin pre-expanded particles. In addition, the time for moisturizing the polyamide-based resin pre-expanded particles is preferably 1 minute or more from the viewpoint of increasing the uniformity of the treatment.

Further, the polyamide-based resin pre-expanded particles can be treated by a dehydrator for removing water adhered to the surfaces of the polyamide-based resin pre-expanded particles after the moisturizing treatment. The rotation speed for the dehydration treatment is preferably 100 rpm or more and more preferably 500 rpm, from the viewpoint of reducing the processing time. Further, the rotation speed for the dehydration treatment is preferably 50000 rpm or less. The time of the dehydration treatment is preferably within 10 minutes and more preferably within 5 minutes, in view of the productivity. Further, the time of the dehydration treatment is preferably 1 minute or more in view of the uniformity.

The surface-adhesion water ratio of the polyamide-based resin pre-expanded particles is calculated from the mass of the polyamide-based resin pre-expanded particles (W0), the mass (W1) after water adhered to the surfaces of the polyamide-based resin pre-expanded particles is removed, and the mass (W2) after the polyamide-based resin pre-expanded particles are dried at 80 °C in vacuum for 6 hours. The surface-adhesion water ratio (mass %) is calculated as follows: surface-adhesion water ratio = (W0 - W1) / W2 $\times$ 100.

In addition, for calculating the water content ratio of the polyamide-based resin pre-expanded particles having a hollow portion or a recessed external shape, a high-pressure gas can be used to remove water adhered to the surfaces of the hollow portion or the recessed external shape. For example, air or another gas adjusted to a blow speed of 100 m/sec or more can be suitably used.

In the present embodiment (e.g., the embodiments of (1) to (13) described above, for example), the surface-adhesion water ratio of the polyamide-based resin pre-expanded particles is preferably 14 mass% or less. It is thus preferable to remove water adhered to the surfaces of the polyamide-based resin pre-expanded particles so that the surface-adhesion water ratio is 14 mass% or less. When the surface-adhesion water ratio is 14 mass% or less, aggregation of particles caused by interaction of water adhered to the surfaces is becomes less likely to occur when the raw materials are loaded during in-mold foam molding, and the pre-expanded particles are closely loaded in the mold, to thereby enable production of a molded product with less sparse defects, as well as improving the mechanical strength. From this perspective, the surface-adhesion water ratio of the polyamide-based resin pre-expanded particles is more preferably 10 mass% or less and even more preferably 7 mass% or less.

Further, the surface-adhesion water ratio is preferably adjusted so as to be smaller than the water content ratio in the particles from the viewpoint of reducing variation in the amount of the air introduced to the polyamide-based resin pre-expanded particles when compressed air is introduced, as well as stabilizing the mechanical strength of the shaped article.

As the method of subjecting polyamide-based resin pre-expanded particles to a moisturizing treatment, the water content ratio of a polyamide-based resin composition may be adjusted in advance before production of the polyamide-based resin pre-expanded particles. For example, polyamide-based resin pre-expanded particles having a high water content ratio can be produced by pelletizing an extruded molten resin in water at a higher temperature so that the water content ratio of pellets before foaming is adjusted to 5 mass% or more, followed by foaming the pellets. The temperature upon the pelletization is preferably 40 °C or higher, and more preferably 50 °C or higher.

The solvent treatment has been described with reference to the example in which water is used. When the solvent used in the solvent treatment is ethanol, the polyamide-based resin pre-expanded particles are preferably treated in advance so that the ethanol content ratio is 3 mass% or more and 15 mass% or less, for example.

For measuring the ethanol content ratio and the water content ratio of the polyamide-based resin pre-expanded particles in the case where an ethanolizing treatment is performed, water and ethanol adhered to the surfaces are removed from the polyamide-based resin pre-expanded particles, follows by preparation of a measurement specimen by adding THF. Then, water and ethanol are quantified using the GC-MS-SIM (selected ion monitoring) technique. Specifically, from the quantity of water W (water) and the quantity of ethanol W (EtOH), the water content ratio is calculated as follows: water content ratio = W (water) / (100 - W (water) - W (EtOH)) $\times$ 100, and the ethanol content ratio is calculated as follows: ethanol content ratio = W (EtOH) / (100 - W (water) - W (EtOH)) $\times$ 100.

In the present embodiment (e.g., the embodiments of (1) to (13) described above, for example), the number average molecular weight Mn of the polyamide-based resin pre-expanded particles is preferably 35,000 or less from a viewpoint of lowering the viscosity of the polyamide-based resin composition in a high temperature environment upon foam molding, to thereby promote mutual diffusion of the resin between foamed particles, and improve the fusibility and improve the mechanical strength of a shaped article, and is preferably 10,000 or more from a viewpoint of making the three-dimensional network of the polymer chains to be retained even in a high temperature environment during foam molding, to thereby enhance the strength of foam membranes and suppress breakage of foams. It is more preferably from 15,000 to 30,000, and even more preferably from 16,000 to 26,000. In addition, the weight average molecular weight Mw of the polyamide-based resin pre-expanded particles is preferably 140,000 or less from a viewpoint of lowering the viscosity of the polyamide-based resin composition in a high temperature environment upon foam molding, to thereby promote mutual diffusion of the resin between foamed particles, and improve the fusibility and improve the mechanical strength of a shaped article, and is preferably 35,000 or more from a viewpoint of making the three-dimensional network of the polymer chains to be retained even in a high temperature environment upon foam molding, to thereby enhance the strength of foam membranes and suppress breakage of foams. It is more preferably from 40,000 to 125,000, and even more preferably from 65,000 to 120,000.

The number average molecular weight Mn and the weight average molecular weight Mw can be measured by methods described in Examples below.

In the present embodiment (e.g., the embodiments of (1) to (13) described above, for example), in a second scan DSC curve measured under Condition B described below using a differential scanning calorimeter, the polyamide-based resin pre-expanded particles have a molten crystal ratio at the temperature higher than the extrapolated melting start temperature by 10 °C of preferably 15% or more, more preferably 20% or more, even more preferably from 20% to 40%, and particularly preferably from 20% to 35%, when a straight line approximating a DSC curve on the high temperature side relative to the maximum endothermic peak after an end of melting is used as a baseline, the extrapolated melting start temperature being defined as the temperature at the intersection point between the tangent line at the inflection point on the low temperature side relative to the maximum endothermic peak and the baseline. When the molten crystal ratio is within one of the above ranges, the viscosity of the polyamide-based resin composition in a high temperature environment upon foam molding decreases, which promotes mutual diffusion of the resin between foamed particles and improves the fusibility and improves the mechanical strength of a shaped article.

Condition B:

A second DSC curve is defined as a DSC curve obtained when the polyamide-based resin pre-expanded particles are sealed in a sealable pressure-resistant container made of aluminum while being immersed in pure water, heated to melt at a heating rate of 10 °C/min by the differential scanning calorimeter (DSC), subsequently cooled to solidify at a cooling rate of 10 °C/min, and heated to melt again at 10 °C/min by the differential scanning calorimeter (DSC).

The molten crystal ratio can be measured by a method described in Examples below.

In the present embodiment (e.g., the embodiments of (1) to (13) described above, for example), the polyamide-based resin pre-expanded particles preferably have a closed cell ratio of 60% or more, more preferably 70% or more, and even more preferably 80% or more, after being heated with saturated steam at the temperature higher than the thermal fusion temperature of the polyamide-based resin pre-expanded particles by 5 °C.

When the closed cell ratio is 60% or more, a foam shaped product having a satisfactory mechanical strength can be produced by loading the pre-expanded particles in a mold and heating them by steam to form the foam shaped product. Further, shrinkage caused by breakage of foam membranes can be suppressed, and a polyamide-based resin foam shaped product which is excellent in heat resistance and mechanical strength can be produced.

The closed cell ratio can be adjusted, for example, by addition of a heat stabilizer (e.g., addition of the base metal element-containing compound described above), use of a combination of polyamide-based resins of which difference in the melting point is within the preferred range mentioned above, and use of a crystalline polyamide resin.

The method of measuring the closed cell ratio will be described in Examples.

(Production method)

The polyamide-based resin pre-expanded particles according to the present embodiment can be obtained by causing a foaming agent to become contained (impregnated) in the polyamide-based resin composition containing the polyamide-based resin set forth above and then performing foaming.

The method by which the foaming agent becomes contained (impregnated) in the polyamide-based resin composition is not specifically limited and may be a generally used method.

Examples of methods that can be used include a method in which an aqueous medium is used in a suspension of water (suspension impregnation), a method in which a thermal decomposition-type foaming agent such as sodium bicarbonate is used (foaming agent decomposition), a method in which a gas is set as an atmosphere of equal or higher pressure than the critical pressure and is brought into contact with the base material resin in a liquid phase state (liquid phase impregnation), and a method in which a gas is set as an atmosphere of lower pressure than the critical pressure and is brought into contact with the base material resin in a gas phase state (gas phase impregnation).

Of the above methods, gas phase impregnation is particularly preferable.

Compared to suspension impregnation carried out under high-temperature conditions, gas phase impregnation makes it easier to obtain a high foaming agent content because the gas has a higher solubility in the resin. Consequently, it is easier to achieve a high expansion ratio and uniform cell size in the resin when gas phase impregnation is adopted.

Foaming agent decomposition is inconvenient as it is carried out under high-temperature conditions in the same way as suspension impregnation. Moreover, not all the thermal decomposition-type foaming agent that is added in the foaming agent decomposition method is converted to gas, and thus the amount of gas that is generated tends to be relatively small. Accordingly, gas phase impregnation is advantageous compared to foaming agent decomposition in terms that a high foaming agent content can be easily achieved.

Moreover, compared to liquid phase impregnation, gas phase impregnation allows the use of more compact equipment (pressure apparatus, cooling apparatus, etc.) and facilitates equipment cost reduction.

Although the conditions of gas phase impregnation are not specifically limited, an ambient pressure from 0.5 MPa to 6.0 MPa and an ambient temperature from 5 °C to 30 °C are preferable from a viewpoint of causing the gas to dissolve in the resin more efficiently.

The foaming agent used in production of the polyamide-based resin pre-expanded particles according to the present embodiment is not specifically limited and may, for example, be air or a compound that can be set in a gaseous state.

Examples of compounds settable in a gaseous state that may be used include inorganic compounds such as carbon dioxide, nitrogen, oxygen, hydrogen, argon, helium, and neon; fluorocarbons such as trichlorofluoromethane (R11), dichlorodifluoromethane (R12), chlorodifluoromethane (R22), tetrachlorodifluoroethane (R112), dichlorofluoroethane (R141b), chlorodifluoroethane (R142b), difluoroethane (R152a), HFC-245fa, HFC-236ea, HFC-245ca, and HFC-225ca; hydrofluoroolefins such as HFO-1234y and HFO-1234ze(E); saturated hydrocarbons such propane, n-butane, i-butane, n-pentane, i-pentane, and neopentane; ethers such as dimethyl ether, diethyl ether, methyl ethyl ether, isopropyl ether, n-butyl ether, diisopropyl ether, furan, furfural, 2-methylfuran tetrahydrofuran, and tetrahydropyran; chlorinated hydrocarbons such as methyl chloride and ethyl chloride; and alcohols such as methanol and ethanol.

The air or compound that can be set in a gaseous state may be a single type used individually or a combination of two or more types.

The foaming agent is preferably a foaming agent that has low environmental impact and is not flammable or combustion-supporting, is more preferably an inorganic compound that is not flammable from a viewpoint of safety during handling, and is particularly preferably carbon dioxide gas from a viewpoint of solubility in the polyamide-based resin and ease of handling.

No specific limitations are placed on the method by which the polyamide resin-based composition containing (impregnated with) the foaming agent is foamed. Examples of methods that can be used include a method in which the polyamide resin-based composition is suddenly transferred from a high-pressure atmosphere to a low-pressure atmosphere such that a gas of the foaming agent dissolved in the polyamide resin-based composition expands and causes foaming to occur and a method in which heating is performed using, for example, pressurized steam to expand gas in the polyamide resin-based composition and cause foaming to occur. In particular, the latter method of heating and foaming is preferable due to a benefit of enabling uniform cell size within a polyamide-based resin foam shaped product that is produced and a benefit of facilitating production of a polyamide-based resin foam shaped product having a low expansion ratio through control of the expansion ratio.

In foaming of the pre-expanded particles to obtain a desired expansion ratio, foaming may be performed in a single stage, or multi-stage foaming including secondary foaming, tertiary foaming, and so forth may be performed. In a situation in which multi-stage foaming is performed, it is easy to produce pre-expanded particles having a high expansion ratio. The pre-expanded particles used in shaping are preferably pre-expanded particles that have been subjected to foaming up until tertiary foaming from a viewpoint of reducing the amount of resin that is used per unit volume.

In particular, in a situation in which multi-stage foaming is performed, it is preferable that at each stage, the pre-expanded particles are pressure treated with gas prior to foaming. Although no specific limitations are placed on the gas that is used in the pressure treatment other than being a gas that is inert with respect to the polyamide-based resin, an inorganic gas or hydrofluoroolefin having high safety as a gas and low global warming potential as a gas is preferable. Examples of inorganic gases that can be used include air, carbon dioxide gas, nitrogen gas, oxygen gas, ammonia gas, hydrogen gas, argon gas, helium gas, and neon gas. Examples of hydrofluoroolefins that can be used include HFO-1234y and HFO-1234ze(E). In particular, air and carbon dioxide gas are preferable in terms of ease of handling and cost. The pressure treatment method may be, but is not specifically limited to, a method in which the pre-expanded particles are loaded into a pressure tank and the gas is supplied into the tank.

[Polyamide-based resin foam shaped product]

A polyamide-based resin foam shaped product of the present embodiment will be described.

The polyamide-based resin foam shaped product of the present embodiment preferably contains the polyamide-based resin pre-expanded particles of the present embodiment described above, and more preferably consisting only of the polyamide-based resin pre-expanded particles of the present embodiment. In the polyamide-based resin foam shaped product of the present embodiment, at least a part of the polyamide-based resin pre-expanded particles are preferably fused together.

The polyamide-based resin foam shaped product of the present embodiment can be produced from the polyamide-based resin pre-expanded particles of the present embodiment described above, and can be molded into an arbitrary three-dimensional shape by causing the polyamide-based resin pre-expanded particles to be thermally fused.

Examples of the method by which the polyamide-based resin pre-expanded particles are shaped include, for example, a method in which the pre-expanded particles are loaded into the cavity of a mold for shaping and are heated to cause foaming and simultaneous thermal fusion of the pre-expanded particles to one another, and then solidified by cooling for shaping. Although the foam shaped product can be produced by loading the polyamide-based resin pre-expanded particles into a mold and closing the mold to expand the particles, a method may be employed in which the polyamide-based resin pre-expanded particles are loaded in a mold which cannot be sealed, followed by heating, to thereby cause the pre-expanded particles to be fused together. Depending on the type of resin and the molding conditions, a general-purpose in-mold automated foam molding machine may be used.

The method by which the pre-expanded particles are loaded is not specifically limited and examples thereof include a cracking method in which the pre-expanded particles are loaded into a mold in a slightly opened state, a compression method in which pressure compressed pre-expanded particles are loaded into a mold in a closed state, and a compression cracking method in which the above cracking method is adopted after loading pressure compressed pre-expanded particles into the mold.

The method of producing a polyamide-based resin foam shaped product of the present embodiment preferably includes loading the polyamide-based resin pre-expanded particles into a cavity of a mold, supplying steam into the cavity with a temperature of equal to or lower than the melting temperature of the polyamide-based resin pre-expanded particles to cause expansion and thermal fusion of the polyamide-based resin pre-expanded particles.

Herein, in the method of producing a polyamide-based resin foam shaped product, it is preferable that the pre-expanded particles are pressure treated with a gas prior to being loaded into the cavity of the mold for molding from a viewpoint of applying uniform gas pressure in the cells of the pre-expanded particles and obtaining a uniform cell size within the particles. Although no specific limitations are placed on the gas used in the pressure treatment, an inorganic gas is preferable from a viewpoint of flame retardance, heat resistance, and dimensional stability. The inorganic gas and method of pressure treatment are the same as in a situation in which pre-expanded particles are pressure treated with a gas prior to foaming in the previously described method of foaming the polyamide-based resin.

The heating medium used in molding of the polyamide-based resin pre-expanded particles may be a general-purpose heating medium, is preferably saturated steam or superheated steam from a viewpoint of inhibiting oxidative degradation of the foam shaped product, and is more preferably saturated steam from a viewpoint of enabling uniform heating with respect to the foam shaped product.

The temperature of the saturated steam is preferably equal to or lower than the melting point of the polyamide-based resin pre-expanded particles. Specifically, the temperature of the saturated steam is lower than the melting point of the polyamide-based resin pre-expanded particle by 10 °C or more, more preferably lower than the melting point of the polyamide-based resin pre-expanded particle by 25 °C or more, and even more preferably lower than the melting point of the polyamide-based resin pre-expanded particle by 40 °C or more.

For promoting fusions of particles, the heating temperature (molding temperature) of the polyamide-based resin pre-expanded particles is preferably 100 °C or higher and 270 °C or lower, more preferably 105 °C or higher and 200 °C or lower, and even more preferably 105 °C or higher 160 °C or lower.

In the production method, it is preferable that the pre-expanded particles are pressure treated with a gas prior to being loaded into the cavity of the mold for molding from a viewpoint of applying uniform gas pressure in the cells of the pre-expanded particles and obtaining a uniform cell size within the particles. Although the conditions of the pressure treatment are not specifically limited, an ambient pressure from 0.3 MPa to 6.0 MPa and an ambient temperature from 5 °C to 50 °C are preferable from a viewpoint of pressurizing the pre-expanded particles with gas more efficiently.

Examples of the gas used in the pressure treatment include the gases similar to the foaming agent used for producing the polyamide-based resin pre-expanded particles as described above. Of these, gases of inorganic compounds are preferably used from a viewpoint of flame retardance, heat resistance, and dimensional stability. One of these gases may be used individually, or two or more of these gases may be used in combination.

The gas used for the pressure treatment may be the same as or different from the foaming agent used for producing the polyamide-based resin pre-expanded particles.

The heating medium used in molding of the polyamide-based resin pre-expanded particles may be a general-purpose heating medium, is preferably saturated steam or superheated steam from a viewpoint of inhibiting oxidative degradation of the foam shaped product, and is more preferably saturated steam from a viewpoint of enabling uniform heating with respect to the foam shaped product.

In the case where saturated steam is used as the heating medium, it is preferable to heat (preheat) the polyamide-based resin pre-expanded particles by saturated steam at a temperature equal to or lower than the molding temperature minus 5 °C for 1 second or more and 10 seconds or less, the molding temperature being 100 °C or higher, followed by thermally fusing the polyamide-based resin pre-expanded particles by saturated steam at the molding temperature.

The temperature of the saturated steam used for the preheating is a temperature equal to or lower than the molding temperature minus 5 °C, and is preferably a temperature equal to or lower than the molding temperature minus 6 °C, and more preferably a temperature equal to or lower than the molding temperature minus 7 °C. Further, the temperature of the saturated steam is preferably a temperature equal to or higher than the molding temperature minus 15 °C, preferably a temperature equal to or higher than the molding temperature minus 14 °C, and more preferably a temperature equal to or higher than the molding temperature minus 13 °C. When the temperature is within one of the above ranges, diffusion of water into the polyamide-based resin pre-expanded particles tends to be promoted while expansion and fusion of the polyamide-based resin pre-expanded particles are suppressed.

Further, the heating time with the saturated steam used for the preheating is preferably 1 second or more and 10 seconds or less, more preferably 1 second or more and 5 seconds or less, and even more preferably 1 second or more and 3 seconds or less. Conventionally, there has been a problem in that the total time required for molding is extended by a step of preheating polyamide-based resin pre-expanded particles to a temperature near the molding temperature, which reduces the productivity. When the heating time is within one of the above ranges, diffusion of water into the polyamide-based resin pre-expanded particles can be promoted while reducing the above problem within a practically acceptable level, which tends to improve the fusibility at the molding temperature.

The method of producing a polyamide-based resin foam shaped product of the present embodiment may include loading the polyamide pre-expanded particles with a water content ratio of 0 mass% or more and 12 mass% or less into a mold; heating the pre-expanded particles with saturated steam at a temperature equal to or lower than a molding temperature minus 5 °C for 15 seconds or more, at a molding temperature set to 100 °C or greater; and then thermally fusing the pre-expanded particles with saturated steam at the molding temperature.

This manufacturing method enables production of a polyamide foam shaped product which has improved fusibility of the polyamide pre-expanded particles during molding and is excellent in mechanical strength.

Further, the polyamide pre-expanded particles may be subjected to a solvent treatment before being loaded into the cavity of the mold for molding. The solvent used in the solvent treatment, or the solvent treatment method, may be the same as the ones described above.

Further, the polyamide pre-expanded particles are preferably subjected to a pressure treatment with a gas before they are loaded into the cavity of the mold for molding. The method of the pressure treatment, or the gas used for the pressure treatment, can be the same as the ones described above.

In the method of producing a polyamide foam shaped product of the present embodiment, the polyamide pre-expanded particles may be heated (preheated) with saturated steam at a temperature equal to or lower than the molding temperature minus 5 °C for 15 seconds or more, before they are heated by saturated steam at the molding temperature.

The heating time with the saturated steam used for the preheating is preferably 15 seconds or more, more preferably 15 seconds to 120 seconds, and even more preferably 30 seconds to 90 seconds. Conventionally, there has been a problem in that the total time required for molding is extended by a step of preheating polyamide pre-expanded particles to a temperature near the molding temperature, which reduces the productivity. When the heating time is within one of the above ranges, diffusion of water into the polyamide pre-expanded particles can be promoted while reducing the above problem within a practically acceptable level, which tends to improve the fusibility at the molding temperature.

The density of the polyamide-based resin foam shaped product of the present embodiment is preferably from 0.02 g/cm$^3$ to 0.8 g/cm$^3$. When the density is 0.02 g/cm$^3$ or more, the thicknesses of foam membranes is prevented from being excessively small by uniformizing bubble sizes, thereby allowing the strength of foam membranes to be maintained. Further, when the density is 0.8 g/cm$^3$ or less, the lightweightness of the foam shaped product can be further enhanced.

The closed cell ratio of the polyamide-based resin foam shaped product of the present embodiment is preferably 75% or more. When the closed cell ratio is 75% or more, the strength of the foamed product can be maintained to be high and the thermal insulation capability of the foamed product can be increased.

The closed cell ratio can be measured by using the method described in Examples below.

The rate of dimensional change under heating of the polyamide-based resin foam shaped product according to the present embodiment is preferably 1.5% or less, and more preferably 1.0% or less. In particular, it is preferable that the rate of dimensional change after being heated for 22 hours at 150 °C is within one of the above ranges, and it is more preferable that both the rate of dimensional change after being heated for 22 hours at 150 °C and the rate of dimensional change after being heated for 22 hours at 170 °C are within one of the above ranges.

The rate of dimensional change is a value measured in accordance with procedure B of dimensional stability evaluation in JIS K6767 after heating for 22 hours at the predetermined temperature.

EXAMPLES

The present disclosure will be described in more detail through the following examples and comparative examples, but are not limited thereto.

The measurement methods used to measure the physical properties of polyamide-based resin pre-expanded particles and polyamide-based resin foam shaped products in the subsequently described examples and comparative examples will be described below.

(1) Contents of base metal element(s) and iodine element

The contents of base metal element(s) and iodine element in the polyamide-based resin composition were measured as follows.

First, for identifying a base metal element in a polyamide-based resin composition, the polyamide-based resin composition was cut out into a piece of 30-mm square, which was subjected to a measurement by an X-ray fluorescence analyzer (trade name: Rigaku ZSX-100e; manufactured by Rigaku Corporation; tubular lamp: Rh). The polyamide-based resin composition could be cut out without being processed when it was a sheet or a foam shaped product having a plane. When the polyamide-based resin composition was in the form of pellets or foamed particles, the polyamide-based resin composition was heated under pressure for 3 minutes by sandwiching them between hot plates heated to a temperature higher than the melting point (described later) by 30 °C, to produce a sheet of the polyamide-based resin composition. After the sheet was cooled and solidified, the sheet was cut out into a piece of 30-mm square for measurement. For each element detected by the X-ray fluorescence analysis, the content of the base metal element was measured by inductively coupled plasma atomic emission spectroscopy (ICP-AES).

First, the sample was precisely weighed, thermally decomposed using sulfuric acid and a hydrogen peroxide solution, which was introduced into an ICP-AES apparatus (trade name: iCAP 6300Duo; manufactured by Thermo Fisher Scientific, Inc.) for measurement. The emission intensity of the sample was compared with a calibration curve which had been prepared in advance, to thereby estimate the concentration of the target element present in the system. The mass concentration of the target element contained in the sample was then determined based on the weight of the sample. Further, the mass ratio of the base metal element in 100 mass% of the polyamide-based resin was calculated from the concentration of the polyamide-based resin in the sample.

For each element detected by the X-ray fluorescence, an appropriate measurement wavelength was selected. For example, 324.754 nm, 259.940 nm, and 213.856 nm were used when copper element, iron element, and zinc element were detected, respectively.

The mass of iodine element was determined by ion chromatography according to JIS K0127:2013. The sample was decomposed through combustion using the oxygen flask combustion method, and the generated gas was made to be absorbed into an absorption liquid, which was introduced into an ion chromatographic analyzer (trade name: ICS-1500; manufactured by Thermo Fisher Scientific, Inc.) for measurement.

The content (mass ppm) of each element relative to 100 mass% of the polyamide-based resin was then calculated.

(2) Molar ratio of iodine element to base metal element

For each base metal element detected by the X-ray fluorescence described above, the mass concentration measured by the ICP-AES was divided by the atomic weight of the element, and the mass concentrations of all of the base metal elements were summed to determine the molar concentrations (M).

Further, the molar concentration (I) of iodine element was calculated by dividing the mass concentration of iodine element measured by the method of (1) described above by the atomic weight of iodine. The molar ratio of iodine element to the base metal element was then calculated as (I) / (M).

(3) Density

The mass W (kg) of a polyamide-based resin foam shaped product was measured and then the apparent volume Va ($m^3$) of the polyamide-based resin foam shaped product was measured by a water immersion method. A value W/Va ($kg/m^3$) calculated by dividing the mass W by the apparent volume Va was determined to be the density of the polyamide-based resin foam shaped product.

(4) Closed cell ratio

The true volume (Vx) of the polyamide-based resin foam shaped product for which the apparent volume Va had been measured as previously described in (3) was measured using an air pycnometer (produced by Beckman Coulter, Inc.). The closed cell ratio S (%) was then calculated by the following formula (1).

$$S\ (\%) = \{(Vx - W/\rho)/(Va - W/\rho)\} \times 100 \qquad \ldots \text{Expression 1}$$

In the formula, Vx is the true volume ($cm^3$) of the resin foam shaped product, Va is the apparent volume ($cm^3$) of the resin foam shaped product, W is the mass (g) of the resin foam shaped product, and $\rho$ is the density ($g/cm^3$) of the base material resin of the resin foam shaped product.

(5) Expansion ratio and expansion ratio B

Obtained polyamide-based resin pre-expanded particles were pressure treated by sealing the pre-expanded particles in an autoclave, introducing compressed air into the autoclave over 4 hour until the pressure inside the autoclave reached 0.9 MPa while the autoclave was immersed in a hot water at 40 °C, and then maintaining the pressure at 0.9 MPa for 24 hours. The pressure inside the autoclave was then released, and the pre-expanded particles subjected to the pressure treatment were removed and placed in a dish-like container made of a metal mesh. After the polyamide-based resin pre-expanded particles were then placed in a pressure vessel, saturated steam was introduced into the pressure vessel to heat to a predetermined temperature over 20 seconds until the temperature reached the predetermined temperature. The temperature of the saturated steam was adjusted by using saturated steam at 198 °C (1.4 MPa) and adjusting the opening degree of the valve. Thereafter, the pre-expanded particles were made to expand by keeping at the predetermined temperature for 10 seconds. The pre-expanded particles after being heated were dried for 24 hours using a dryer at 60 °C, and the densities $\rho 2$ and $\rho 3$ were measured according to the method of (3) described above. The value $\rho 1/\rho 2$ obtained by dividing the density $\rho 1$ of the pre-expanded particles before the pressure treatment by $\rho 2$ was determined as the expansion ratio of the pre-expanded particles, and the value $\rho 1/\rho 3$ obtained by dividing $\rho 1$ by $\rho 3$ was determined as the expansion ratio B of the pre-expanded particles.

(6) Thermal fusion temperature

Obtained polyamide-based resin pre-expanded particles were placed in a state in which the pressure inside cells thereof was atmospheric pressure and in which a foaming agent such as a hydrocarbon or carbon dioxide gas was not contained therein. Next, 10 g of the pre-expanded particles were placed in a metal mesh container such that the pre-expanded particles were in contact with one another, and the pre-expanded particles were then heated by introducing saturated steam over 20 seconds until the temperature reached a predetermined temperature, and the predetermined temperature was kept for 10 seconds. Temperatures which were different from each other in step-wise by 1.5 °C were used as the predetermined temperature, and three measurements were carried out at each temperature. After the heating, the temperature (°C) at which at least a part of the pre-expanded particles were fused together in all of the three measurements was determined as the thermal fusion temperature of the pre-expanded particles.

Note that the determination as to whether at least a part of the pre-expanded particles were fused together or not was made as follows. A standard sieve having a nominal dimension as defined in JIS Z8801 which was no smaller than the particle size of the pre-expanded particles and no greater than twice the particle size of the pre-expanded particles was used (for example, a standard sieve with d = 3.35 mm was used in the case where the particle size of the pre-expanded particles was 2.5 mm). The pre-expanded particles prior to heating were sieved through the standard sieve. The weight ratio of the particles which did not pass through the sieve and remained on the sieve was determined as $X_i$. The pre-expanded particles after being heated were then sieved through a sieve similar to the sieve used for determination of $X_i$. The weight ratio of the particles which did not pass through the sieve and remained on the sieve was determined as $X_e$. When $X_e > X_i$, it was determined that at least a part of the pre-expanded particles were fused together.

(7) Extrapolated melting start temperature measured under water

In a second scan DSC curve obtained under the following measurement condition (Condition B), when a straight line approximating a DSC curve on the high temperature side relative to the maximum endothermic peak after the end of melting was used as a baseline, the extrapolated melting start temperature measured under water was defined as the temperature at the intersection point between the tangent line at the inflection point on the low temperature side relative to the maximum endothermic peak and the baseline.

(Preparation of measurement sample)

Polyamide-based resin pre-expanded particles were shredded with a precision nipper (N-55 manufactured by HOZAN TOOL IND. CO., LTD.) into pieces sized to 1-mm square. The shredded pieces were placed in a sealable container made of aluminum (GCA-0017; manufactured by Hitachi High-Tech Science Corporation) of which tare weight had been measured in advance. The sealable container and 10 mg of the shredded polyamide-based resin pre-expanded particles were placed on a precision balance (AD6000; manufactured by Perkin Elmer), and the weight was recorded to thereby precisely weigh the weight of the polyamide-based resin pre-expanded particles. Pure water was then poured into a sample pan to the brim with a Pasteur pipette so that the shredded polyamide-based resin pre-expanded particles were immersed in pure water. The sealable container was covered with a lid and sealed with a manual sample sealer (K-W10100724; manufactured by Hitachi High-Tech Science Corporation). The sealable container was allowed to stand for 12 hours or longer, and then weighed on a precision balance (BM-20; manufactured by A&D Company, Limited). The weight of water remained after the container had been allowed to stand was calculated from the sample weight upon preparation and the tare weight of the container. The sealable container with a remaining water weight of more than 3 mg was selected as a measurement sample.

(DSC measurement)

The measurement sample and a reference sample containing 12 mg of water was set in a DSC apparatus (DSC3500 manufactured by NETSZCH Co., Ltd.). A second scan DSC curve was obtained by monitoring changes in calorie as follows. Under a nitrogen flow atmosphere of 20 mL/min, the sample was heated from 40 °C to 200 °C at a heating rate of 10 °C/min, then held at 200 °C for 1 minute, and subsequently cooled to 40 °C at 10 °C/min. After the sample was held at 40 °C for 5 minutes, the sample was heated again to 200 °C at a heating rate of 10 °C/min.

(Data analysis)

Immediately after completion of the DSC measurement, the sample was weighed with the precision balance (BM-20; manufactured by A&D Company, Limited). The weight of water remained after completion of the measurement was calculated from the weight of the sample upon preparation and the tare weight of the pan. The measurement result in which more than 3 mg of water remained was used for an analysis. In a second scan DSC where the vertical axis represented the calorie (mW/mg) and the horizontal axis represented the temperature (°C), when a straight line approximating a DSC curve on the high temperature side relative to the maximum endothermic peak after the end of melting was used as a baseline, the extrapolated melting start temperature measured under water was defined as the temperature at the intersection point between the tangent line at the inflection point on the low temperature side relative to the maximum endothermic peak and the baseline. This analysis was repeated at least four times, i.e., N=4, to calculate the extrapolated melting start temperature. If a result of an analysis contained a deviation of ±10% or greater, the result was excluded. The average was calculated again from results of at least N=3. This recalculated average was determined as the extrapolated melting start temperature measured under water of the polyamide-based resin pre-expanded particles.

(8) Melting point

The melting point of a polyamide-based resin was measured in accordance with JIS K7121 using a differential scanning calorimeter (product name: DSC 7; manufactured by PerkinElmer Inc.). A sample of 8 mg was precisely weighed out and used for measurement. The measurement was performed in a nitrogen atmosphere and, in terms of temperature conditions, the sample was held at 300 °C for 5 minutes, was then cooled to 50 °C at a cooling rate of 20 °C/min, and was subsequently heated from 50 °C to 300 °C at a heating rate of 20 °C/min. The temperature (°C) giving the peak top indicating heat absorption was determined as the melting point of the resin. The melting points of the polyamide-based resin composition and the polyamide-based resin pre-expanded particles were also measured by the similar manner.

(9) Measurement of maximum endothermic peak of polyamide-based resin pre-expanded particles using differential scanning calorimeter (DSC)

(Condition A)

The peak temperature and width of the maximum endothermic peak of polyamide-based resin pre-expanded particles were determined using a differential scanning calorimeter (DSC) (DSC3500 manufactured by NETZSCH-Geratebau GmbH). Water and/or ethanol adhered to surfaces of the polyamide-based resin pre-expanded particles were removed. The polyamide-based resin pre-expanded particles were then loaded into a sealable container made of aluminum (GCA-0017 manufactured by Hitachi High-Tech Science Corporation). A measurement is carried out in a nitrogen stream of 50 mL/min. Specifically, a DSC curve was obtained by measuring a change in the calorie when the polyamide-based resin pre-expanded particles were heated from 30 °C to 280 °C at 10 °C/min.
In the resultant DSC curve, the temperature (°C) at the peak top of the maximum endothermic peak where the heat absorption was maximized from the start of the measurement was determined. In addition, on the DSC curve, the width (°C) of the maximum endothermic peak, when a straight line approximating the DSC curve on the high temperature side relative to the maximum endothermic peak after the end of melting was used as the baseline, was determined, wherein the width corresponded to the difference between the extrapolated melting start temperature which was the temperature at the intersection point between the tangent line at the inflection point on the low temperature side relative to the maximum endothermic peak and the baseline, and the extrapolated melting end temperature which was the temperature at the intersection point between the tangent line at the inflection point of the maximum endothermic peak on the high temperature side and the baseline.

(10) Water content ratio

Polyamide-based resin pre-expanded particles were weighed (W0). The polyamide-based resin pre-expanded particles were then spread on a dry fiber sheet (Kim Towel available from Nippon Paper Industries Co., Ltd.) and water adhered to surfaces was removed with another fiber sheet. The polyamide-based resin pre-expanded particles were then weighed (W1). The polyamide-based resin pre-expanded particles were dried at 80 °C in vacuum for 6 hours, and were weighed again (W2). The water content ratio (%) was calculated as follows: water content ratio = (W1 - W2) / W2 × 100 and the surface-adhesion water ratio (%) was calculated as follows: surface-adhesion water ratio = (W0 - W1) / W2 × 100.

(11) Number average molecular weight Mn and weight average molecular weight Mw

The number average molecular weight Mn and the weight average molecular weight Mw of a polyamide-based resin were determined as follows. The sample was dissolved in hexafluoroisopropanol (+ 10 mmol/L of sodium trifluoroacetate) to prepare a 0.2-w/v% sample solution. After this sample solution was filtered through a membrane filter (0.2 μm), 10 μL of the sample solution was injected into a GPC (Shodex GPC-104; manufactured by Shoko Scientific Co., Ltd.) and the eluted solution was detected by an RI detector. The elution conditions were as follow: eluent: hexafluoroisopropanol (+ 10 mmol/L of sodium trifluoroacetate), columns: two Shodex GPC LF-404 columns which were connected, column temperature: 40 °C, and flow rate: 0.3 mL/min. A calibration curve had been prepared in advance using solutions of PMMA having known molecular weights. The number average molecular weight and the weight average molecular weight in terms of PMMA were determined from the obtained a chromatogram on the basis of the calibration curve. Measurements were also carried out on polyamide-based resin compositions and the polyamide-based resin pre-expanded particles in the similar manner.

(12) Acid value and amine value

The acid value of a polyamide-based resin was determined by the potentiometric titration method according to JIS K0070 as follows. A 100-mL conical flask was charged with 1 g of a sample which had been dried at 60 °C under vacuum for 16 hours and 80 mL of benzyl alcohol. An air-cooling tube was attached to the flask. The mixture was heated to dissolve the sample for 13 minutes in a hot water bath of 200 °C, and was subsequently left to be cooled to room temperature. A titration was performed using a potentiometric titration apparatus (AT-710 manufactured by KYOTO ELECTRONICS MANUFACTURING CO., LTD.; electrode: glass composite electrode manufactured by KYOTO ELECTRONICS MANUFACTURING CO., LTD.) (titrant: 0.01-mol/L KOH solution in alcohol), and the obtained inflection point was used as the end point. A blank test was also performed in the similar manner, and the acid value was calculated from the following formula:

$$\text{Acid value (mg KOH/g)} = (V_a - V_b) \times N \times f \times 56.11 / S$$

where Va represents the titrant volume (mL) in the test, Vb represents the titrant solution volume (mL) in the blank test, N represents the concentration of the titrant (mol/L), S represents the weight (g) of the sample, and $f$ represents the factor of the titrant.

The amine value of the polyamide-based resin was determined by the potentiometric titration method as follows. A 100-mL conical flask was charged with 1 g of a sample which had been dried at 60 °C under vacuum for 16 hours and 80 mL of m-cresol. The mixture was stirred at room temperature for 24 hours, and then stirred with a hot stirrer of 80 °C for 3 hours to dissolve the sample. After the sample was confirmed to be dissolved, the solution was allowed to cool to room temperature. A titration was performed using a potentiometric titration apparatus (AT-710 manufactured by KYOTO ELECTRONICS MANUFACTURING CO., LTD.; electrode: glass composite electrode manufactured by KYOTO ELECTRONICS MANUFACTURING CO., LTD.) (titrant: 0.05-mol/L methanol perchlorate solution), and the obtained inflection point was used as the end point. A blank test was also performed in the similar manner, and the amine value was calculated from the following formula:

$$\text{Amine value (mg KOH/g)} = (V_a - V_b) \times N \times f \times 56.11 / S$$

where Va represents the titrant volume (mL) in the test, Vb represents the titrant solution volume (mL) in the blank test, N represents the concentration of the titrant (mol/L), S represents the weight (g) of the sample, and $f$ represents the factor of the titrant.

(13) Molten crystal ratio

The molten crystal ratio was determined using the second scan DSC curve measured in the above Condition B. The ratio (%) of the partial integral value of the maximum endothermic peak from (the extrapolated melting start temperature minus 20 °C) to (the extrapolated melting end temperature plus 20 °C), to the total integral value of the maximum endothermic peak from (the extrapolated melting start temperature minus 20 °C) to (the extrapolated melting start temperature plus 10 °C), was used as the molten crystal ratio at the temperature higher than the extrapolated melting start temperature by 10 °C. Note that the integral values of the peak portion were calculated by outputting plot data using a generally-used analysis program supplied with the differential scanning calorimeter (DSC).

In addition, when a straight line approximating the DSC curve on the high temperature side relative to the maximum endothermic peak after the end of melting was used as a baseline, the temperature at the intersection point between the tangent line at the inflection point of the maximum endothermic peak on the high temperature side and the baseline was used as the extrapolated melting end temperature.

(A) Heat resistance

The heat resistance of polyamide-based resin foam shaped products in the subsequently described examples and comparative examples was evaluated by evaluating the rate of dimensional change under heating and change in external appearance after heating.

(A-1) Rate of dimensional change

After shaping, a foam shaped product was dried for 24 hours using a 60 °C dryer to remove moisture contained in the foam shaped product. The rate of dimensional change (%) of the foam shaped product was then evaluated by preparing a specimen and carrying out heating tests (150 °C and 170 °C, 22 hours) in accordance with procedure B of dimensional stability evaluation in JIS K6767.

In terms of evaluation criteria, a smaller rate of dimensional change was judged to indicate better foam shaped product heat resistance.

(A-2) Change in external appearance

The change in external appearance of the specimen after the heating test previously described in (A-1) was evaluated by visual observation. The evaluation criteria were as follows.

A (excellent): No cracking, contraction, or expansion of the specimen
B (satisfactory): Slight cracking, contraction, and/or expansion of the specimen observed at a level not problematic for use
C (poor): Cracking, contraction, and/or expansion of the specimen observed at a level problematic for use

-: Not evaluated

(B) Bending strength

After shaping, a foam shaped product was dried for 24 hours using a 60 °C dryer to remove moisture contained in the shaped product. The bending strength of the foam shaped product was then measured in accordance with JIS K7171 to be used as the bending strength (MPa).

In addition, a specimen was dried in a dryer at 60 °C for 24 hours and was subsequently left to stand in an oven at 150 °C for 500 hours. The bending strength (MPa) after heating was then measured in accordance with JIS K7171. The strength retention rate (%) before and after heating was calculated from the ratio of the bending strength after heating to the bending strength before heating.

(C) External appearance

The external appearance of the surface of the foam shaped product immediately after shaping was evaluated by visual observation. The evaluation criteria were as follows.

A (excellent): Smooth, and shrink warping was slight
B (satisfactory): Pre-expanded particles shrank, and insignificant shrink warping was observed at a level not problematic for use
C (poor): Pre-expanded particles shrank, and shrink warping observed at a level not suitable for practical use

(D) Fusion rate

A box cutter was used to make an incision line of 5 mm in depth into the surface of a foam shaped product having a plate shape of 300 mm in length, 300 mm in width, and 20 mm in thickness such as to divide the foam shaped product in half lengthwise, and the foam shaped product was then split along this line. With regards to pre-expanded particles appearing at the split surface, the number (a) of pre-expanded particles for which breaking occurred within the particle (i.e., pre-expanded particles broken by the split surface) and the number (b) of pre-expanded particles for which breaking occurred along the interface between pre-expanded particles (i.e., pre-expanded particles for which the interface between pre-expanded particles became the split surface) were counted, and the fusion rate (%) was calculated by the following formula (2).

$$\text{Fusion rate (\%)} = \{a \,/\, (a + b)\} \times 100 \qquad\qquad \dots (2)$$

The sample was rated according to the following criteria: A (good) when the fusion rate was 80% or more, or C (poor) when the fusion rate was less than 80%.

(E) Oil resistance

The oil resistance of a foam shaped product was evaluated in accordance with ASTM D543 / JIS K7114 as follows. After shaping, a foam shaped product was dried for 24 hours using a 60 °C dryer to remove moisture contained in the shaped product. This foam shaped product was cut into a plate sized to a vertical length of 75 mm, a horizontal length of 25 mm, and a thickness of 10 mm. The plate was immersed in mechanical oil (trade name: OMARA S2G68; manufactured by SHOWA SHELL SEKIYU K.K.) at 23 °C for 7 days, and the absolute value of the ratio of change in volume before and after the immersion was determined. The sample was rated according to the following criteria: A (good) when the ratio of change in volume was less than 5%, or C (poor) when the ratio of change in volume was 5% or more.

(F) Specific volume of polyamide-based resin foam shaped product

A polyamide-based resin foam shaped product was cut into a rectangular parallelepiped specimen, and the mass W (g) was measured. The volume V (cc) was calculated, and V/W (cc/g) was determined to be used as the specific volume.

(G) Bending strength of polyamide-based resin foam shaped product

The bending strength of a polyamide-based resin foam shaped product was calculated according to JIS K7171 (2008). A foam shaped product was subjected to a vacuum drying treatment for 40 °C for 24 hours or more, and a specimen (dimensions of the specimen: 300 mm in length, 40 mm in width, and 20 mm in thickness) of the foam shaped product was prepared. The bending strength (MPa) was measured using an autograph (AG-5000D type) manufactured by Shimadzu Corporation while a load was being applied in the thickness direction.

[Examples 1 to 5]

A pelletized base material resin was prepared by using a twin screw extruder to melt-knead nylon 666 (nylon 66/6) (product name: Novamid 2430A; manufactured by DSM) as the polyamide-based resin, copper iodide, potassium iodide, and a nucleating agent in a ratio listed in Table 1 under a heated condition, and extrude the melt-kneaded product in the form of strands, which were then cooled by water in a cold-water bath and cut to obtain pellets.

The base material resin was then impregnated with carbon dioxide gas as a foaming agent by the method described in the examples of JP 2011-105879 A. The base material resin containing the carbon dioxide gas was heated to cause foaming and thereby obtain pre-expanded particles having a density of 0.3 g/cm$^3$.

The resultant pre-expanded particles were loaded into the cavity (cavity dimensions: 300 mm in length, 300 mm in width, 20 mm in height) of an in-mold shaping mold in the amount corresponding to the 70% of the cavity volume, and the mold was clamped. The mold was installed in an in-mold foam molding machine.

Subsequently, the polyamide pre-expanded particles were molded by supplying saturated steam at 119 °C into the cavity for 10 seconds to cause thermal fusion of the polyamide-based resin pre-expanded particles.

Cooling water was supplied into the cavity of the mold to cool the resultant foam shaped product. Thereafter, the mold was opened and the foam shaped product was removed.

The results of the evaluations of Examples 1 to 5 are summarized in Table 1. The base metal element detected by the X-ray fluorescence was only copper, and the mass concentrations measured by the ICP-AES are also summarized in Table 1.

[Example 6]

A foam shaped product was produced in the same way as in Example 1 with the exception that 0.02 parts by mass of copper acetate was used as the base metal element-containing compound instead of copper iodide, and potassium iodide was not used. The base metal element detected by the X-ray fluorescence was only copper, and the mass concentration measured by the ICP-AES was 102 ppm.

[Example 7]

A foam shaped product was produced in the same way as in Example 1 with the exception that 5 parts by mass of a zinc-containing ionomer (trade name: Himilan HM1706; manufactured by Mitsui-DuPont Polychemicals K.K.) was used as the base metal element-containing compound instead of copper iodide, and potassium iodide was not used. The base metal element detected by the X-ray fluorescence was only zinc, and the mass concentration measured by the ICP-AES was 42 ppm.

[Example 8]

A foam shaped product was produced in the same way as in Example 1 with the exception that 0.05 parts by mass of iron (II) chloride was used as the base metal element-containing compound instead of copper iodide, and potassium iodide was not used. The base metal element detected by the X-ray fluorescence was only iron, and the mass concentration measured by the ICP-AES was 211 ppm.

[Example 9]

A foam shaped product was produced in the same way as in Example 1 with the exception that 80 parts by mass of nylon 666 (nylon 66/6) (product name: Novamid 2430A; manufactured by DSM) and 20 parts by mass of nylon 6I (product name: Grivory G16; manufactured by EMS-Chemie, Gross-Umstadt) were used as the polyamide-based resins. The base metal element detected by the X-ray fluorescence was only copper, and the mass concentration measured by the ICP-AES was 95 ppm.

[Example 10]

A foam shaped product was produced in the same way as in Example 1 with the exception that 40 parts by mass of nylon 666 (nylon 66/6) (product name: Novamid 2430A; manufactured by DSM) and 60 parts by mass of nylon 6I (product name: Grivory G16; manufactured by EMS-Chemie, Gross-Umstadt) were used as the polyamide-based resins. The base metal element detected by the X-ray fluorescence was only copper, and the mass concentration measured by the ICP-AES was 98 ppm.

[Comparative Example 1]

A foam shaped product was produced in the same way as in Example 1 with the exception that copper iodide and potassium iodide were not added. No base metal element was the detected by the X-ray fluorescence.

[Comparative Example 2]

A foam shaped product was produced in the same way as in Example 1 with the exception that the amount of copper iodide added was changed to 0.002 parts by mass. The base metal element detected by the X-ray fluorescence was only copper, and the mass concentration measured by the ICP-AES was less than 10 ppm.

[Table 1]

EP 3 950 794 B1

| | | | | Ex 1 | Ex 2 | Ex 3 | Ex 4 | Ex 5 | Ex 6 | Ex 7 | Ex 8 | Ex 9 | Ex 10 | Com Ex 1 | Com Ex 2 |
|---|---|---|---|---|---|---|---|---|---|---|---|---|---|---|---|
| Polyamide-based resin composition | Polyamide-based resin | Nylon 666 (Melting point: 192°C) | pt. by mass | 100 | 100 | 100 | 100 | 100 | 100 | 100 | 100 | 80 | 40 | 100 | 100 |
| | | Nylon 6I | pt. by mass | 0 | 0 | 0 | 0 | 0 | 0 | 0 | 0 | 20 | 60 | 0 | 0 |
| | | (11) Num. avg. molecular wt. | x10000 | 2.1 | 2.1 | 2.1 | 2.1 | 2.1 | 2.1 | 2.0 | 2.1 | 1.7 | 1.5 | 2.0 | 2.1 |
| | | (11) Wt. avg. molecular wt. | x10000 | 10.0 | 10.0 | 10.0 | 10.0 | 10.0 | 9.8 | 8.3 | 9.9 | 6.8 | 6.3 | 7.8 | 7.9 |
| | | (12) Acid value | mg KOH/g | 2.0 | 2.0 | 2.0 | 2.0 | 2.0 | 2.0 | 2.3 | 2.0 | 2.8 | 3.3 | 2.3 | 2.2 |
| | | (12) Amine value | mg KOH/g | 1.9 | 1.9 | 1.9 | 1.9 | 1.9 | 1.9 | 2.4 | 1.9 | 2.1 | 2.3 | 2.0 | 2.0 |
| | Base metal-containing compound | CuI | pt. by mass | 0.03 | 0.03 | 0.03 | 0.01 | 0.3 | - | - | - | 0.03 | 0.03 | - | 0.002 |
| | | copper (I) acetate | pt. by mass | - | - | - | - | - | 0.02 | - | - | - | - | - | - |
| | | Zn-ionomer | pt. by mass | - | - | - | - | - | - | 5 | - | - | - | - | - |
| | | FeCl$_2$ | pt. by mass | - | - | - | - | - | - | - | 0.05 | | | - | - |
| | Iodine-containing compound | KI | pt. by mass | 0.29 | 0.1 | 0.03 | 0.2 | 0.3 | - | - | - | 0.29 | 0.29 | - | - |
| | Nucleating agent | Talc | pt. by mass | 1 | 1 | 1 | 1 | 1 | 1 | 1 | 1 | 1 | 1 | 1 | 1 |
| | Content of base metal element | | ppm by mass | 96 | 97 | 96 | 33 | 970 | 102 | 42 | 211 | 95 | 98 | - | 7 |
| | Content of elemental copper | | ppm by mass | 96 | 97 | 96 | 33 | 970 | 102 | N.D. | N.D. | 95 | 98 | N.D. | 7 |

(continued)

| | | | Ex 1 | Ex 2 | Ex 3 | Ex 4 | Ex 5 | Ex 6 | Ex 7 | Ex 8 | Ex 9 | Ex 10 | Com Ex 1 | Com Ex 2 |
|---|---|---|---|---|---|---|---|---|---|---|---|---|---|---|
| | Content of elemental zinc | ppm by mass | N.D. | N.D. | N.D. | N.D. | N.D. | N.D. | 42 | N.D. | N.D. | N.D. | N.D. | N.D. |
| | Content of elemental iron | ppm by mass | N.D. | N.D. | N.D. | N.D. | N.D. | N.D. | N.D. | 211 | N.D. | N.D. | N.D. | N.D. |
| | Content of elemental iodine | ppm by mass | 2400 | 880 | 390 | 1600 | 3220 | < 10 | < 10 | < 10 | 1000 | 920 | - | < 10 |
| | Molar ratio of elemental iodine to base metal element (I)/(M) | - | 12.5 | 4.5 | 2.0 | 24.3 | 1.7 | - | - | - | 5.3 | 4.7 | - | - |
| Polyamide-based resin pre foamed particles | (3) Density | g/cm$^3$ | 0.3 | 0.3 | 0.3 | 0.3 | 0.3 | 0.3 | 0.3 | 0.3 | 0.25 | 0.2 | 0.3 | 0.3 |
| | (4) Closed cell ratio | - | 94 | 96 | 92 | 93 | 92 | 91 | 91 | 87 | 86 | 84 | 92 | 90 |
| | (5) Expansion ratio (116 °C) | - | 1.1 | 1.0 | 1.1 | 1.0 | 1.1 | 1.1 | 1.1 | 1.1 | 1.0 | 1.1 | 1.1 | 1.2 |
| | (5) Expansion ratio (119 °C) | - | 1.3 | 1.2 | 1.3 | 1.2 | 1.2 | 1.2 | 1.2 | 1.2 | 1.2 | 1.3 | 0.9 | 0.9 |
| | (5) Expansion ratio (121 °C) | - | 1.2 | 1.2 | 1.2 | 1.2 | 1.3 | 1.2 | 1.1 | 1.0 | 1.2 | 1.2 | 0.7 | 0.8 |
| | (6) Thermal fusion temp | °C | 116 | 116 | 116 | 116 | 116 | 116 | 116 | 116 | 116 | 116 | 116 | 116 |
| | (7) Extrapolated melting start temp measured under water | °C | 112 | 112 | 112 | 112 | 112 | 112 | 112 | 112 | 112 | 112 | 112 | 112 |
| | (5) Expansion ratio B (Extrapolated melting start temp measured under water + 10 °C) | - | 1.2 | 1.2 | 1.1 | 1.2 | 1.2 | 1.2 | 1.1 | 1.0 | 1.1 | 1.0 | 0.7 | 0.7 |
| | (8) Melting point | °C | 192 | 192 | 192 | 192 | 192 | 192 | 192 | 192 | 190 | 188 | 192 | 192 |
| | (13) Molten crystal ratio | % | 39.5 | 39.3 | 39.3 | 40.0 | 23.5 | 39.2 | 39.7 | 38.0 | 39.2 | 40.2 | 40.1 | 41.0 |
| | (A) Heat resistance evaluation (150 °C) — Rate of dimensionalchange | % | 0.3 | 0.2 | 0.3 | 0.2 | 0.2 | 0.2 | 0.3 | 0.3 | 0.2 | 1.0 | - | - |
| | (A) Heat resistance evaluation (150 °C) — Change in external appearance | - | A | A | A | A | A | A | A | A | A | B | - | - |

(continued)

|  |  |  |  | Ex 1 | Ex 2 | Ex 3 | Ex 4 | Ex 5 | Ex 6 | Ex 7 | Ex 8 | Ex 9 | Ex 10 | Com Ex 1 | Com Ex 2 |
|---|---|---|---|---|---|---|---|---|---|---|---|---|---|---|---|
| Polyamide-based resin foam shaped product | (A) Heat resistance evaluation (170 °C) | Rate of dimensional change | - | 0.5 | 0.6 | 0.5 | 0.6 | 0.4 | 0.2 | 0.7 | 0.7 | 1.21 | 2.1 | - | - |
|  |  | Change in external appearance | - | A | A | A | A | A | A | A | A | A | C | - | - |
|  | (B) Bending strength | Before heating | MPa | 1 | 1 | 0.9 | 1 | 1 | 0.9 | 0.9 | 0.8 | 0.7 | 0.7 | 0.3 | 0.4 |
|  |  | After heating | MPa | 0.9 | 0.9 | 0.7 | 0.9 | 0.9 | 0.5 | 0.6 | 0.6 | 0.6 | 0.5 | - | - |
|  |  | Strength retention rate | - | 90 | 90 | 76 | 90 | 90 | 55 | 67 | 75 | 85 | 71 | - | - |
|  | (C) External appearance |  | - | A | A | A | A | A | B | A | B | A | B | C | C |
|  | (D) Fusion rate |  | - | A | A | A | A | A | A | A | A | A | A | C | C |
|  | (E) Oil resistance |  | - | A | A | A | A | A | A | A | A | A | C | - | - |

In Examples 1 to 8, the pre-expanded particles made of the polyamide-based resin compositions containing from 10 mass ppm to 3000 mass ppm of the base metal element had expansion ratios of 1.0 or more at temperatures higher than the thermal fusion temperature by 5 °C, and the mechanical strengths of the shaped products were also excellent. In addition, in Examples 1 to 8, the expansion ratios B were also 1.0, or more, and the shaped products excellent in mechanical strengths were achieved.

When Examples 9 to 10 are compared against Example 1, it can be seen that addition of the amorphous polyamide could provide foam shaped products having a smaller density and excellent lightweightness although the oil resistance and the heat resistance were slightly inferior.

In contrast, as evident from Comparative Examples 1 and 2, the pre-expanded particles made of polyamide-based resins containing no base metal element or 10 mass ppm or less of the base metal element had expansion ratios at temperatures higher than the thermal fusion temperature of less than 1.0 and expansion ratios B of less than 1.0. As a result, the foam shaped products obtained from these pre-expanded particles shrunk, and the appearance, the mechanical strength, and the fusibility of the molded products became inferior.

The raw materials used in the following Examples 11 to 41 and Comparative Examples 3 to 9 are as follows.

PA 6/66 (A): polyamide 6/66 resin, Novamid 2430A, melting point: 192 °C
PA 6: polyamide 6 resin, UBE Nylon 1030B, melting point 225 °C
PA 6I: polyamide 6I
PA 6/66 (B): polyamide 6/66 Resin, Novamid 2330J, melting point: 213 °C
PA 66: polyamide 66 resin, Leona, melting point: 265 °C

[Example 11]

PA 6/66 (A) and PA 6 were mixed in the ratio described in Table 2 as the polyamide-based resins. Melt-kneading was carried out in a twin screw extruder under a heated condition, and extrusion into strands was then carried out. The strands were cooled by water in a cold water bath and cut to obtain pellets having an average particle size of 1.4 mm.

The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 200 °C was blown for 20 seconds to produce aggregates of polyamide-based resin pre-expanded particles. The density of the resultant pre-expanded particles was 0.29 g/cm$^3$.

After the resultant polyamide-based resin pre-expanded particles were dried in an oven at 50 °C for 16 hours, the polyamide-based resin pre-expanded particles were pressure treated by sealing the polyamide-based resin pre-expanded particles in an autoclave, introducing compressed air into the autoclave over 1 hour until the pressure inside the autoclave reached 0.4 MPa, and then maintaining the pressure at 0.4 MPa for 24 hours. The polyamide-based resin pre-expanded particles subjected to pressure treatment were loaded into the cavity (cavity dimensions: 300 mm in length, 300 mm in width, 25 mm in height) of an in-mold mold for molding and the mold was clamped. The mold was installed in an in-mold foam molding machine. Thereafter, the polyamide-based resin pre-expanded particles were molded into a foamed product by supplying saturated steam at 105 °C into the cavity for 10 seconds, and subsequently supplying saturated steam at 119 °C into the cavity for 30 seconds to cause foaming and thermal fusion of the polyamide-based resin pre-expanded particles. Cooling water was supplied into the cavity of the mold to cool the resultant foamed product. Thereafter, the mold was opened and the polyamide-based resin foam shaped product was removed.

[Examples 12 to 24]

A polyamide-based resin foam shaped product was produced in the same way as in Example 11 with the exception that the mixing ratio and the types of polyamide upon melt-kneading the polyamide-based resins in the twin screw extruder under the heated condition were changed as described in Table 2.

[Examples 25 to 29]

Polyamide-based resins were mixed in the ratio described in Table 2. Melt-kneading was carried out in a twin screw extruder under a heated condition, and extrusion into strands was then carried out. The strands were cooled by water in a cold water bath and cut to obtain pellets having an average particle size of 1.4 mm.

The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 240 °C was blown for 20 seconds to produce aggregates of polyamide-based resin pre-expanded particles.

After the resultant polyamide-based resin pre-expanded particles were dried in an oven at 50 °C for 16 hours, the polyamide-based resin pre-expanded particles were pressure treated by sealing the polyamide-based resin pre-expanded particles in an autoclave, introducing compressed air into the autoclave over 1 hour until the pressure inside the autoclave reached 0.4 MPa, and then maintaining the pressure at 0.4 MPa for 24 hours. The polyamide-based resin pre-expanded particles subjected to pressure treatment were loaded into the cavity (cavity dimensions: 300 mm in length, 300 mm in width, 25 mm in height) of an in-mold mold for molding and the mold was clamped. The mold was installed in an in-mold foam molding machine. Thereafter, the polyamide-based resin pre-expanded particles were molded into a foamed product by supplying saturated steam at 140 °C into the cavity for 10 seconds, and subsequently supplying saturated steam at 150 °C into the cavity for 30 seconds to cause foaming and thermal fusion of the polyamide-based resin pre-expanded particles. Cooling water was supplied into the cavity of the mold to cool the resultant foamed product. Thereafter, the mold was opened and the polyamide-based resin foam shaped product was removed.

[Example 30]

Polyamide 6/66 (A) was used as the polyamide-based resin. Melt-kneading was carried out in a twin screw extruder under a heated condition, and extrusion into strands was then carried out. The strands were cooled by water in a cold water bath and cut to obtain pellets having an average particle size of 1.4 mm.
The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 200 °C was blown for 20 seconds to produce aggregates of polyamide-based resin pre-expanded particles.
The polyamide-based resin pre-expanded particles were stored in a constant temperature and humidity chamber at 23 °C and 55% for 48 hours or more. The water content ratio was then measured and determined to be 3.5%.
The resultant polyamide-based resin pre-expanded particles were pressure treated by sealing the polyamide-based resin pre-expanded particles in an autoclave, introducing compressed air into the autoclave over 1 hour until the pressure inside the autoclave reached 0.4 MPa, and then maintaining the pressure at 0.4 MPa for 24 hours. The polyamide-based resin pre-expanded particles subjected to pressure treatment were loaded into the cavity (cavity dimensions: 300 mm in length, 300 mm in width, 25 mm in height) of an in-mold mold for molding and the mold was clamped. The mold was installed in an in-mold foam molding machine. Thereafter, the polyamide-based resin pre-expanded particles were molded into a foamed product by supplying saturated steam at 105 °C into the cavity for 10 seconds, and subsequently supplying saturated steam at 119 °C into the cavity for 30 seconds to cause foaming and thermal fusion of the polyamide-based resin pre-expanded particles. Cooling water was supplied into the cavity of the mold to cool the resultant foamed product. Thereafter, the mold was opened and the polyamide-based resin foam shaped product was removed.

[Example 32]

Polyamide 6/66 (A) was used as the polyamide-based resin. Melt-kneading was carried out in a twin screw extruder under a heated condition, and extrusion into strands was then carried out. The strands were cooled by water in a cold water bath and cut to obtain pellets having an average particle size of 1.4 mm.
The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 200 °C was blown for 20 seconds to produce aggregates of polyamide-based resin pre-expanded particles.
The polyamide-based resin pre-expanded particles were placed in a bag of a water-permeable nonwoven fabric, immersed in a constant-temperature water bath heated to 50 °C for 10 minutes, and then subjected to a dehydration treatment in a dehydrator at 1000 rpm/min for 3 minutes to obtain water-containing polyamide-based resin pre-expanded particles. The water content ratio of these pre-expanded particles was 12.0%.
Thereafter, a polyamide-based resin foam shaped product was produced in the same way as in Example 11.

[Example 34]

Polyamide-based resins were mixed as described in Table 3. Melt-kneading was carried out in a twin screw extruder under a heated condition, and extrusion into strands was then carried out. The strands were cooled by water in a cold water bath and cut to obtain pellets having an average particle size of 1.4 mm.
The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 200 °C was blown for 20 seconds to produce aggregates of polyamide-based resin pre-expanded particles.

The polyamide-based resin pre-expanded particles were placed in a bag of a water-permeable nonwoven fabric, immersed in a constant-temperature water bath heated to 50 °C for 10 minutes, and then subjected to a dehydration treatment in a dehydrator at 1000 rpm/min for 3 minutes to obtain water-containing polyamide-based resin pre-expanded particles. The water content ratio of these pre-expanded particles was 10.0%.

Thereafter, a polyamide-based resin foam shaped product was produced in the same way as in Example 11.

[Example 35]

Polyamide-based resins were mixed as described in Table 3. Melt-kneading was carried out in a twin screw extruder under a heated condition, and extrusion into strands was then carried out. The strands were cooled by water in a cold water bath and cut to obtain pellets having an average particle size of 1.4 mm.

The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 200 °C was blown for 20 seconds to produce aggregates of polyamide-based resin pre-expanded particles.

The polyamide-based resin pre-expanded particles were placed in a bag of a water-permeable nonwoven fabric, immersed in a constant-temperature water bath heated to 50 °C for 30 minutes, and then subjected to a dehydration treatment in a dehydrator at 1000 rpm/min for 3 minutes to obtain water-containing polyamide-based resin pre-expanded particles. The water content ratio of these pre-expanded particles was 14.6%.

Thereafter, a polyamide-based resin foam shaped product was produced in the same way as in Example 11.

[Example 36]

Polyamide-based resins were mixed as described in Table 3. Melt-kneading was carried out in a twin screw extruder under a heated condition, and extrusion into strands was then carried out. The strands were cooled by water in a cold water bath and cut to obtain pellets having an average particle size of 1.4 mm.

The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 200 °C was blown for 20 seconds to produce aggregates of polyamide-based resin pre-expanded particles.

The polyamide-based resin pre-expanded particles were placed in a bag of a water-permeable nonwoven fabric, immersed in a constant-temperature water bath heated to 50 °C for 5 minutes, and then subjected to a dehydration treatment in a dehydrator at 1000 rpm/min for 3 minutes to obtain water-containing polyamide-based resin pre-expanded particles. The water content ratio of these pre-expanded particles was 7.5%.

Thereafter, a polyamide-based resin foam shaped product was produced in the same way as in Example 11.

[Example 37]

Polyamide-based resins were mixed as described in Table 3. Melt-kneading was carried out in a twin screw extruder under a heated condition, and extrusion into strands was then carried out. The strands were cooled by water in a cold water bath and cut to obtain pellets having an average particle size of 1.4 mm.

The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 200 °C was blown for 20 seconds to produce aggregates of polyamide-based resin pre-expanded particles.

The polyamide-based resin pre-expanded particles were placed in a bag of a water-permeable nonwoven fabric, immersed in a constant-temperature water bath heated to 50 °C for 10 minutes, and then subjected to a dehydration treatment in a dehydrator at 1000 rpm/min for 3 minutes to obtain water-containing polyamide-based resin pre-expanded particles. The water content ratio of these pre-expanded particles was 10.2%.

Thereafter, a polyamide-based resin foam shaped product was produced in the same way as in Example 11.

[Comparative Example 3]

Only polyamide 6/66 (A) was used as the polyamide-based resin. Melt-kneading was carried out in a twin screw extruder under a heated condition, and extrusion into strands was then carried out. The strands were cooled by water in a cold water bath and cut to obtain pellets having an average particle size of 1.4 mm.

The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 200 °C was blown for 20 seconds to produce aggregates of polyamide-based resin pre-expanded particles.

After the polyamide-based resin pre-expanded particles were dried in an oven at 50 °C for 16 hours, a polyamide-based resin foam shaped product was produced in the same way as in Example 11.

[Comparative Example 4]

Only polyamide 6/66 (A) was used as the polyamide-based resin. Melt-kneading was carried out in a twin screw extruder under a heated condition, and extrusion into strands was then carried out. The strands were cooled by water in a cold water bath and cut to obtain pellets having an average particle size of 1.4 mm.

The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 200 °C was blown for 20 seconds to produce aggregates of polyamide-based resin pre-expanded particles. The water content ratio of the resultant pre-expanded particles was 1.5%. The resultant polyamide-based resin pre-expanded particles were pressure treated by sealing the polyamide-based resin pre-expanded particles in an autoclave, introducing compressed air into the autoclave over 1 hour until the pressure inside the autoclave reached 0.4 MPa, and then maintaining the pressure at 0.4 MPa for 24 hours. The polyamide-based resin pre-expanded particles subjected to pressure treatment were loaded into the cavity (cavity dimensions: 300 mm in length, 300 mm in width, 25 mm in height) of an in-mold mold for molding and the mold was clamped.

Thereafter, a polyamide-based resin foam shaped product was produced in the same way as in Example 11.

[Comparative Example 5]

Only polyamide 6/66 (A) was used as the polyamide-based resin. Melt-kneading was carried out in a twin screw extruder under a heated condition, and extrusion into strands was then carried out. The strands were cooled by water in a cold water bath and cut to obtain pellets having an average particle size of 1.4 mm.

The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 200 °C was blown for 20 seconds to produce aggregates of polyamide-based resin pre-expanded particles.

The polyamide-based resin pre-expanded particles were placed in a bag of a water-permeable nonwoven fabric, immersed in a constant-temperature water bath heated to 50 °C for 60 minutes, and then subjected to a dehydration treatment in a dehydrator at 1000 rpm/min for 3 minutes to obtain water-containing polyamide-based resin pre-expanded particles. The water content ratio of these pre-expanded particles was 15.4%.

Thereafter, a polyamide-based resin foam shaped product was produced in the same way as in Example 11.

[Comparative Example 6]

Polyamide 66 and polyamide 6 were mixed at a ratio of 25 parts by mass of polyamide 6 with respect to 100 parts by mass of polyamide 66 as the polyamide-based resins. Melt-kneading was carried out in a twin screw extruder under a heated condition, and extrusion into strands was then carried out. The strands were cooled by water in a cold water bath and cut to obtain pellets having an average particle size of 1.4 mm.

The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 270 °C was blown for 20 seconds to produce aggregates of polyamide-based resin pre-expanded particles.

After the polyamide-based resin pre-expanded particles were heated in an oven at 50 °C for 16 hours, production of a polyamide-based resin foam shaped product was attempted. Because the melting point of the polyamide resin was too high, however, the attempt failed.

[Comparative Examples 7 and 8]

A polyamide-based resin foam shaped product was produced in the same way as in Example 11 with the exception that polyamide 6/66 (A) and polyamide 6I were mixed as the polyamide-based resins at a ratio described in Table 3.

[Example 41]

Polyamide-based resins were mixed as described in Table 3. Melt-kneading was carried out in a twin screw extruder under a heated condition, and extrusion into strands was then carried out. The strands were cooled by water in a cold water bath and cut to obtain pellets having an average particle size of 1.4 mm.

The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 200 °C was blown for 20 seconds to produce aggregates of polyamide-based resin pre-expanded particles.

The polyamide-based resin pre-expanded particles were placed in a bag of a water-permeable nonwoven fabric, immersed in a constant-temperature water bath heated to 50 °C for 10 minutes, and then subjected to a dehydration treatment in a dehydrator at 1000 rpm/min for 3 minutes to obtain water-containing polyamide-based resin pre-expanded particles. The water content ratio of these pre-expanded particles was 7.0%.

The resultant polyamide-based resin pre-expanded particles were pressure treated by sealing the polyamide-based resin pre-expanded particles in an autoclave, introducing compressed air into the autoclave over 1 hour until the pressure inside the autoclave reached 0.4 MPa, and then maintaining the pressure at 0.4 MPa for 24 hours. The polyamide-based resin pre-expanded particles subjected to pressure treatment were loaded into the cavity (cavity dimensions: 300 mm in length, 300 mm in width, 25 mm in height) of an in-mold mold for molding and the mold was clamped. The mold was installed in an in-mold foam molding machine. Thereafter, the polyamide-based resin pre-expanded particles were molded into a foamed product by supplying saturated steam at 105 °C into the cavity for 10 seconds, and subsequently supplying saturated steam at 120 °C into the cavity for 30 seconds to cause foaming and thermal fusion of the polyamide-based resin pre-expanded particles. Cooling water was supplied into the cavity of the mold to cool the resultant foamed product. Thereafter, the mold was opened and the polyamide-based resin foam shaped product was removed.

[Comparative Example 9]

Polyamide-based resins were mixed as described in Table 3. Melt-kneading was carried out in a twin screw extruder under a heated condition, and extrusion into strands was then carried out. The strands were cooled by water in a cold water bath and cut to obtain pellets having an average particle size of 1.4 mm.

The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 200 °C was blown for 20 seconds to produce aggregates of polyamide-based resin pre-expanded particles.

The polyamide-based resin pre-expanded particles were placed in a bag of a water-permeable nonwoven fabric, immersed in a constant-temperature water bath heated to 50 °C for 10 minutes, and then subjected to a dehydration treatment in a dehydrator at 1000 rpm/min for 3 minutes to obtain water-containing polyamide-based resin pre-expanded particles. The water content ratio of these pre-expanded particles was 7.2%.

The resultant polyamide-based resin pre-expanded particles were pressure treated by sealing the polyamide-based resin pre-expanded particles in an autoclave, introducing compressed air into the autoclave over 1 hour until the pressure inside the autoclave reached 0.4 MPa, and then maintaining the pressure at 0.4 MPa for 24 hours. The polyamide-based resin pre-expanded particles subjected to pressure treatment were loaded into the cavity (cavity dimensions: 300 mm in length, 300 mm in width, 25 mm in height) of an in-mold mold for molding and the mold was clamped. The mold was installed in an in-mold foam molding machine. Thereafter, the polyamide-based resin pre-expanded particles were molded into a foamed product by supplying saturated steam at 105 °C into the cavity for 10 seconds, and subsequently supplying saturated steam at 120 °C into the cavity for 30 seconds to cause foaming and thermal fusion of the polyamide-based resin pre-expanded particles. Cooling water was supplied into the cavity of the mold to cool the resultant foamed product. Thereafter, the mold was opened and the polyamide-based resin foam shaped product was removed.

[Example 31]

Polyamide 6/66 (A) as the polyamide-based resin and the nucleating agent were dry blended in the ratio described in Table 4. Melt-kneading was carried out in a twin screw extruder under a heated condition, and extrusion into strands was then carried out. The strands were cooled by water in a cold water bath and cut to obtain pellets having an average particle size of 1.4 mm.

The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 200 °C was blown for 20 seconds to produce aggregates of polyamide-based resin pre-expanded particles.

The polyamide-based resin pre-expanded particles were placed in a bag of a water-permeable nonwoven fabric, immersed in a constant-temperature water bath heated to 50 °C for 5 minutes, and then subjected to a dehydration treatment in a dehydrator at 1000 rpm/min for 3 minutes to obtain water-containing polyamide-based resin pre-expanded particles. The water content ratio of these pre-expanded particles was 7.5%.

The resultant polyamide-based resin pre-expanded particles were pressure treated by sealing the polyamide-based resin pre-expanded particles in an autoclave, introducing compressed air into the autoclave over 1 hour until the pressure inside the autoclave reached 0.4 MPa, and then maintaining the pressure at 0.4 MPa for 24 hours. The polyamide-based resin pre-expanded particles subjected to pressure treatment were loaded into the cavity (cavity dimensions: 300 mm in length, 300 mm in width, 25 mm in height) of an in-mold mold for molding and the mold was clamped. The mold was installed in an in-mold foam molding machine. Thereafter, the polyamide-based resin pre-expanded particles were molded into a foamed product by supplying saturated steam at 105 °C into the cavity for 10 seconds, and subsequently supplying saturated steam at 119 °C into the cavity for 30 seconds to cause foaming and thermal fusion of the polyamide-based resin pre-expanded particles. Cooling water was supplied into the cavity of the mold to cool the resultant foamed product. Thereafter, the mold was opened and the polyamide-based resin foam shaped product was removed.

[Example 33]

Polyamide-based resins were mixed as described in Table 4. Melt-kneading was carried out in a twin screw extruder under a heated condition, and extrusion into strands was then carried out. The strands were cooled by water in a cold water bath and cut to obtain pellets having an average particle size of 1.4 mm.

The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 200 °C was blown for 20 seconds to produce aggregates of polyamide-based resin pre-expanded particles.

The polyamide-based resin pre-expanded particles were placed in a bag of a water-permeable nonwoven fabric, immersed in a constant-temperature water bath heated to 50 °C for 5 minutes, and then subjected to a dehydration treatment in a dehydrator at 1000 rpm/min for 3 minutes to obtain water-containing polyamide-based resin pre-expanded particles. The water content ratio of these pre-expanded particles was 7.7%.

Thereafter, a polyamide-based resin foam shaped product was produced in the same way as in Example 11.

[Example 38]

Polyamide-based resins were mixed as described in Table 4. Melt-kneading was carried out in a twin screw extruder under a heated condition, and extrusion into strands was then carried out. The strands were cooled by water in a cold water bath and cut to obtain pellets having an average particle size of 1.4 mm.

The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 200 °C was blown for 20 seconds to produce aggregates of polyamide-based resin pre-expanded particles.

The polyamide-based resin pre-expanded particles were placed in a bag of a water-permeable nonwoven fabric, immersed in a constant-temperature water bath heated to 50 °C for 5 minutes, and then subjected to a dehydration treatment in a dehydrator at 1000 rpm/min for 3 minutes to obtain water-containing polyamide-based resin pre-expanded particles. The water content ratio of these pre-expanded particles was 7.8%.

Thereafter, a polyamide-based resin foam shaped product was produced in the same way as in Example 11.

[Example 39]

Polyamide-based resins were mixed as described in Table 4. Melt-kneading was carried out in a twin screw extruder under a heated condition, and extrusion into strands was then carried out. The strands were cooled by water in a cold water bath and cut to obtain pellets having an average particle size of 1.4 mm.

The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 200 °C was blown for 20 seconds to produce aggregates of polyamide-based resin pre-expanded particles.

The polyamide-based resin pre-expanded particles were placed in a bag of a water-permeable nonwoven fabric, immersed in a constant-temperature water bath heated to 50 °C for 5 minutes, and then subjected to a dehydration treatment in a dehydrator at 1000 rpm/min for 3 minutes to obtain water-containing polyamide-based resin pre-expanded particles. The water content ratio of these pre-expanded particles was 7.5%.

Thereafter, a polyamide-based resin foam shaped product was produced in the same way as in Example 11.

[Example 40]

Polyamide-based resins were mixed as described in Table 4. Melt-kneading was carried out in a twin screw extruder under a heated condition, and extrusion into strands was then carried out. The strands were cooled by water in a cold water bath and cut to obtain pellets having an average particle size of 1.4 mm.

The resultant pellets were loaded into a pressure vessel at 10 °C. Carbon dioxide gas at 4 MPa gas was blown into the pellets, and the pellets were left to stand for 12 hours so that the gas was absorbed. The pellets containing carbon dioxide gas were then transferred to a foaming apparatus, and the air at 200 °C was blown for 20 seconds to produce aggregates of polyamide-based resin pre-expanded particles.

The polyamide-based resin pre-expanded particles were placed in a bag of a water-permeable nonwoven fabric, immersed in a constant-temperature water bath heated to 50 °C for 5 minutes, and then subjected to a dehydration treatment in a dehydrator at 1000 rpm/min for 3 minutes to obtain water-containing polyamide-based resin pre-expanded particles. The water content ratio of these pre-expanded particles was 7.6%.

Thereafter, a polyamide-based resin foam shaped product was produced in the same way as in Example 11.

[Table 2]

| | | | Ex 11 | Ex 12 | Ex 13 | Ex 14 | Ex 15 | Ex 16 | Ex 17 | Ex 18 | Ex 19 | Ex 20 | Ex 21 | Ex 22 | Ex 23 | Ex 24 | Ex 25 | Ex 26 | Ex 27 | Ex 28 | Ex 29 |
|---|---|---|---|---|---|---|---|---|---|---|---|---|---|---|---|---|---|---|---|---|---|
| Polyamide-based resin pre-foamed particles | Polyamide-based resin | PA 6/66 (A) Melting point: 192 °C | pt. by mass | 100 | 100 | 100 | 100 | 100 | 100 | 100 | 100 | 100 | 100 | 100 | 100 | 100 | 100 | - | - | - | - | - |
| | | PA 6 Melting point: 225 °C | pt. by mass | 1 | 3 | 5 | 7 | 15 | - | - | - | - | - | - | - | - | - | 100 | 100 | 100 | 100 | 100 |
| | | PA 66 Melting point: 265 °C | pt. by mass | - | - | - | - | - | 1 | 3 | 5 | 7 | - | - | - | - | - | - | - | - | - | - |
| | | PA 6/66 (B) Melting point: 213 °C | pt. by mass | - | - | - | - | - | - | - | - | - | 1 | 3 | 5 | 7 | 10 | 1 | 3 | 5 | 7 | 10 |
| | | PA 6I | pt. by mass | - | - | - | - | - | - | - | - | - | - | - | - | - | - | - | - | - | - | - |
| | (11) Num. avg. molecular wt. | | x10000 | 2.1 | 2.0 | 2.0 | 2.0 | 1.9 | 1.8 | 1.8 | 1.7 | 1.6 | 2.3 | 2.3 | 2.3 | 2.3 | 2.1 | 2.3 | 2.3 | 2.3 | 2.3 | 2.1 |
| | (11) Wt. avg. molecular wt. | | x10000 | 8.1 | 8.3 | 8.3 | 8.3 | 8.2 | 7.9 | 7.6 | 7.5 | 7.4 | 9.0 | 9.0 | 9.0 | 8.8 | 9.0 | 9.0 | 9.0 | 9.0 | 9.0 | 8.8 |
| | (12) Acid value | | mg KOH/g | 2.0 | 2.0 | 2.0 | 2.0 | 1.9 | 2.3 | 2.6 | 2.7 | 2.9 | 2.0 | 2.0 | 2.0 | 2.0 | 1.9 | 2.0 | 2.0 | 2.0 | 2.0 | 1.9 |
| | (12) Amine value | | mg KOH/g | 2.0 | 1.9 | 1.9 | 1.9 | 1.9 | 2.0 | 2.0 | 2.1 | 2.1 | 1.9 | 1.9 | 1.9 | 1.9 | 1.9 | 1.9 | 1.9 | 1.9 | 1.9 | 1.9 |
| | (3) Density | | g/cm³ | 0.29 | 0.30 | 0.33 | 0.33 | 0.35 | 0.33 | 0.33 | 0.34 | 0.39 | 0.28 | 0.27 | 0.30 | 0.33 | 0.34 | 0.35 | 0.35 | 0.35 | 0.30 | 0.30 |
| | (4) Closed cell ratio | | % | 92 | 91 | 93 | 94 | 95 | 93 | 92 | 98 | 98 | 93 | 92 | 96 | 94 | 98 | 89 | 91 | 90 | 90 | 91 |
| | (6) Thermal fusion temp | | °C | 116 | 116 | 116 | 116 | 116 | 116 | 116 | 116 | 116 | 116 | 116 | 116 | 116 | 116 | 144 | 144 | 144 | 144 | 144 |
| | (5) Expansion ratio (Thermal fusion temp + 0 °C) | | - | 1.1 | 1.2 | 1.2 | 1.1 | 1.0 | 1.1 | 1.1 | 1.1 | 1.0 | 1.2 | 1.2 | 1.2 | 1.1 | 1.1 | 1.0 | 1.0 | 1.1 | 1.2 | 1.1 |
| | (5) Expansion ratio (Thermal fusion temp + 3 °C) | | - | 1.3 | 1.3 | 1.3 | 1.2 | 1.2 | 1.3 | 1.3 | 1.3 | 1.1 | 1.4 | 1.3 | 1.3 | 1.3 | 1.3 | 1.1 | 1.2 | 1.1 | 1.2 | 1.1 |
| | (5) Expansion ratio (Thermal fusion temp + 5 °C) | | - | 1.2 | 1.3 | 1.2 | 1.2 | 1.1 | 1.1 | 1.2 | 1.2 | 1.2 | 1.3 | 1.3 | 1.3 | 1.2 | 1.1 | 1.2 | 1.2 | 1.2 | 1.1 | 1.2 |
| | (7) Extrapolated melting start temp measured under water | | °C | 111 | 111 | 109 | 110 | 111 | 112 | 111 | 110 | 111 | 111 | 111 | 111 | 109 | 110 | 111 | 139 | 139 | 139 | 139 | 139 |
| | (5) Expansion ratio B (Extrapolated melting start temp measured under water + 10 °C) | | - | 1.2 | 1.3 | 1.3 | 1.2 | 1.1 | 1.0 | 1.2 | 1.2 | 1.2 | 1.3 | 1.3 | 1.3 | 1.2 | 1.1 | 1.2 | 1.2 | 1.2 | 1.1 | 1.2 |
| | (9) Temperature of maximum endothermic peak | | °C | 189 | 191 | 191 | 192 | 193 | 189 | 191 | 191 | 192 | 189 | 190 | 190 | 191 | 192 | 224 | 224 | 222 | 222 | 222 |
| | (9) Width of maximum endothermic peak | | °C | 30 | 32 | 35 | 38 | 43 | 31 | 35 | 38 | 39 | 28 | 30 | 34 | 36 | 41 | 30 | 32 | 34 | 38 | 42 |
| | (10) Water content ratio | | % | ≤0.5 | ≤0.5 | ≤0.5 | ≤0.5 | ≤0.5 | ≤0.5 | ≤0.5 | ≤0.5 | ≤0.5 | ≤0.5 | ≤0.5 | ≤0.5 | ≤0.5 | ≤0.5 | ≤0.5 | ≤0.5 | ≤0.5 | ≤0.5 | ≤0.5 |
| | (13) Molten crystal ratio | | % | 35.9 | 27.8 | 23.6 | 20.3 | 18.3 | 38.3 | 36.7 | 35.0 | 34.6 | 38.7 | 34.6 | 29.0 | 26.2 | 23.4 | 35.5 | 30.2 | 28.8 | 26.4 | 24.8 |
| Polyamide-based resin foam shaped product | (F) Specific volume | | cc/g | 5.8 | 5.6 | 5.1 | 5.1 | 4.8 | 5.1 | 5.1 | 4.9 | 4.3 | 6.0 | 6.2 | 5.6 | 5.1 | 4.9 | 4.8 | 4.8 | 4.8 | 5.6 | 5.6 |
| | (G) Bending strength | | MPa | 1.3 | 1.7 | 1.8 | 1.8 | 1.6 | 1.2 | 1.6 | 1.6 | 1.7 | 1.2 | 1.3 | 1.6 | 1.6 | 1.6 | 1.2 | 1.5 | 1.6 | 1.6 | 1.5 |
| | (D) Fusion rate | | % | 95 | 97 | 98 | 97 | 93 | 93 | 94 | 96 | 93 | 99 | 97 | 95 | 94 | 93 | 92 | 92 | 94 | 95 | 93 |
| | (A) Heat resistance (150 °C) | Rate of dimensional change | % | 0.4 | 0.5 | 0.5 | 0.3 | 0.3 | 0.4 | 0.3 | 0.2 | 0.3 | 0.4 | 0.3 | 0.4 | 0.3 | 0.3 | 0.1 | 0.1 | 0.1 | 0.1 | 0 |
| | | Change in external appearance | - | A | A | A | A | A | A | A | A | A | A | A | A | A | A | A | A | A | A | A |
| | (A) Heat resistance (170 °C) | Rate of dimensional change | % | 0.8 | 0.6 | 0.5 | 0.5 | 0.5 | 0.6 | 0.6 | 0.3 | 0.4 | 0.4 | 0.4 | 0.5 | 0.6 | 0.5 | 0.2 | 0 | 0.4 | 0.3 | 0.1 |
| | | Change in external appearance | - | A | A | A | A | A | A | A | A | A | A | A | A | A | A | A | A | A | A | A |
| | (B) Bending strength | After heating | MPa | 1.2 | 1.6 | 1.7 | 1.8 | 1.6 | 1.1 | 1.5 | 1.6 | 1.6 | 1.1 | 1.2 | 1.6 | 1.5 | 1.6 | 1.1 | 1.4 | 1.5 | 1.5 | 1.5 |
| | | Strength retention rate | % | 92 | 94 | 94 | 100 | 100 | 92 | 94 | 100 | 94 | 92 | 92 | 100 | 94 | 100 | 92 | 93 | 94 | 94 | 100 |
| | (C) External appearance | | - | A | A | A | A | A | A | A | A | A | A | A | A | A | A | A | A | A | A | A |
| | (E) Oil resistance | | - | A | A | A | A | A | A | A | A | A | A | A | A | A | A | A | A | A | A | A |

[Table 3]

| | | | Ex 30 | Ex 32 | Ex 34 | Ex 35 | Ex 36 | Ex 37 | Com Ex 3 | Com Ex 4 | Com Ex 5 | Com Ex 6 | Com Ex 7 | Com Ex 8 | Ex 41 | Com Ex 9 |
|---|---|---|---|---|---|---|---|---|---|---|---|---|---|---|---|---|
| Polyamide-based resin | PA 6/66 (A) Melting point: 192 °C | pt. by mass | 100 | 100 | 100 | 100 | 100 | 100 | 100 | 100 | 100 | - | 100 | 100 | 100 | 100 |
| | PA 6 Melting point: 225 °C | pt. by mass | - | - | 3 | 3 | - | - | - | - | - | 25 | - | - | 25 | 50 |
| | PA 66 Melting point: 265 °C | pt. by mass | - | - | - | - | 3 | 3 | - | - | - | 100 | - | - | - | - |
| | PA 6I | pt. by mass | - | - | - | - | - | - | - | - | - | - | 10 | 20 | - | - |
| | (11) Num. avg. molecular wt. | x10000 | 2.0 | 2.0 | 2.0 | 2.0 | 1.8 | 1.8 | 2.0 | 2.0 | 2.0 | 1.4 | 2.3 | 2.3 | 2.1 | 1.9 |
| | (11) Wt. avg. molecular wt. | x10000 | 7.8 | 7.8 | 8.3 | 8.3 | 7.6 | 7.6 | 7.8 | 7.8 | 7.8 | 5.8 | 9.0 | 9.0 | 8.7 | 8.5 |
| | (12) Acid value | mg KOH/g | 2.3 | 2.3 | 2.0 | 2.0 | 2.6 | 2.6 | 2.3 | 2.3 | 2.3 | 2.4 | 2.0 | 2.0 | 1.9 | 1.9 |
| | (12) Amine value | mg KOH/g | 2.0 | 2.0 | 1.9 | 1.9 | 2.0 | 2.0 | 2.0 | 2.0 | 2.0 | 3.6 | 1.9 | 1.9 | 1.9 | 1.9 |
| Polyamide-based resin prefoamed particles | (3) Density | g/cm³ | 0.35 | 0.31 | 0.28 | 0.27 | 0.34 | 0.45 | 0.30 | 0.34 | 0.30 | 0.5 | 0.35 | 0.24 | 0.5 | 0.5 |
| | (4) Closed cell ratio | % | 92 | 94 | 99 | 98 | 92 | 92 | 92 | 92 | 92 | 99 | 88 | 86 | 97 | 99 |
| | (6) Thermal fusion temp | °C | 116 | 116 | 116 | 116 | 116 | 116 | 116 | 116 | 116 | 195 | 116 | 116 | 120 | 120 |
| | (5) Expansion ratio (Thermal fusion temp + 0 °C) | - | 1.1 | 1.2 | 1.0 | 1.1 | 1.1 | 1.1 | 1.0 | 1.2 | 1.3 | 1.2 | 1.1 | 1.0 | 0.9 | 1.0 |
| | (5) Expansion ratio (Thermal fusion temp + 3 °C) | - | 1.3 | 1.3 | 1.2 | 1.3 | 1.3 | 1.3 | 0.9 | 1.0 | 1.0 | 1.1 | 1.1 | 1.1 | 1.0 | 1.0 |
| | (5) Expansion ratio (Thermal fusion temp + 5 °C) | - | 1.2 | 1.2 | 1.1 | 1.1 | 1.2 | 1.2 | 0.7 | 0.7 | 0.8 | 0.9 | 0.9 | 0.9 | 1.0 | 0.9 |

(continued)

| | Unit | Ex 30 | Ex 32 | Ex 34 | Ex 35 | Ex 36 | Ex 37 | Com Ex 3 | Com Ex 4 | Com Ex 5 | Com Ex 6 | Com Ex 7 | Com Ex 8 | Ex 41 | Com Ex 9 |
|---|---|---|---|---|---|---|---|---|---|---|---|---|---|---|---|
| (7) Extrapolated melting start temp measured under water | °C | 112 | 112 | 111 | 111 | 111 | 111 | 112 | 112 | 112 | 190 | 111 | 111 | 115 | 115 |
| (5) Expansion ratio B (Extrapolated melting start temp measured under water + 10 °C) | - | 1.1 | 1.1 | 1.1 | 1.1 | 1.2 | 1.2 | 0.6 | 0.6 | 0.7 | 0.9 | 0.9 | 0.9 | 1.0 | 0.9 |
| (9) Tempetature of maximum endothermic peak | °C | 184 | 164 | 165 | 161 | 165 | 161 | 190 | 188 | 145 | 265 | 184 | 183 | 180 | 182 |
| (9) Width of maximum endothermic peak | °C | 35 | 65 | 56 | 67 | 43 | 48 | 24 | 25 | 78 | 32 | 26 | 26 | 63 | 73 |
| (10) Water content ratio | - | 3.5 | 12.0 | 100 | 14.6 | 7.5 | 10.2 | $\leq 0.5$ | 1.5 | 15.4 | $\leq 0.5$ | $\leq 0.5$ | $\leq 0.5$ | 7.0 | 7.2 |
| (13) Molten crystal ratio | - | 40.1 | 40.1 | 27.8 | 27.8 | 36.7 | 36.7 | 40.1 | 40.1 | 40.1 | 17.5 | 39.1 | 40.2 | 17.1 | 11.9 |
| (F) Specific volume | cc/g | 4.8 | 5.4 | 6.0 | 6.2 | 4.9 | 3.7 | 5.6 | 4.8 | 5.4 | 3.34 | 4.6 | 6.8 | 3.3 | 3.2 |
| (G) Bending strength | MPa | 1.2 | 1.8 | 2.2 | 2.4 | 1.9 | 1.9 | 0.5 | 0.9 | 0.9 | 0.4 | 0.5 | 0.7 | 0.8 | 0.8 |
| (D) Fusion rate | % | 95 | 95 | 100 | 100 | 100 | 100 | 89 | 90 | 91 | 88 | 88 | 88 | 87 | 87 |
| (A) Heat resistance (150 °C) — Rate of dimensional change | - | 0.5 | 0.5 | 0.5 | 0.2 | 0.7 | 0.7 | 0.6 | 0.7 | 0.7 | N.D. | 0.9 | 1 | 0.4 | 0.4 |
| (A) Heat resistance (150 °C) — Change in external appearance | - | A | A | A | A | A | A | A | A | A | N.D. | A | B | A | A |
| Polyamide-based resin foam shaped product — (A) Heat resistance (170 °C) — Rate of dimensional change | % | 0.6 | 0.6 | 0.7 | 0.5 | 0.8 | 0.7 | 0.9 | 0.9 | 0.8 | N.D. | 1.6 | 2.1 | 0.5 | 0.6 |
| Polyamide-based resin foam shaped product — (A) Heat resistance (170 °C) — Change in external appearance | | A | A | A | A | A | A | A | A | A | N.D. | C | C | A | A |

| | | | Ex 30 | Ex 32 | Ex 34 | Ex 35 | Ex 36 | Ex 37 | Com Ex 3 | Com Ex 4 | Com Ex 5 | Com Ex 6 | Com Ex 7 | Com Ex 8 | Ex 41 | Com Ex 9 |
|---|---|---|---|---|---|---|---|---|---|---|---|---|---|---|---|---|
| (B) Bending strength | After heating | MPa | 1.6 | 1.7 | 2 | 2.3 | 1.8 | 1.9 | 0.4 | 0.9 | 0.8 | N.D. | 0.4 | 0.5 | 0.7 | 0.8 |
| | Strength retention rate | - | 94 | 94 | 91 | 96 | 95 | 100 | 80 | 100 | 89 | N.D. | 80 | 71 | 88 | 100 |
| (C) External appearance | | - | A | A | A | A | A | A | C | B | C | N.D. | B | C | B | B |
| (E) Oil resistance | | - | A | A | A | A | A | A | A | A | A | N.D. | C | C | A | A |

[Table 4]

| | | | | | | | | |
|---|---|---|---|---|---|---|---|---|
| Polyamide-based resin pre foamed particles | Polyamide-based resin | PA 6/66 (A) Melting point: 192 °C | pt. by mass | 100 | 100 | 100 | 100 | 100 |
| | | PA 6 Melting point: 225 °C | pt. by mass | - | 3 | - | - | 3 |
| | | (11) Num. avg. molecular wt. | x10000 | 2.0 | 2.0 | 2.1 | 2.1 | 2.1 |
| | | (11) Wt. avg. molecular wt. | x10000 | 7.8 | 8.3 | 10.0 | 10.0 | 9.1 |
| | | (12) Acid value | mg KOH/g | 2.3 | 2.0 | 2.0 | 2.0 | 1.9 |
| | | (12) Amine value | mg KOH/g | 2.0 | 1.9 | 1.9 | 1.9 | 1.8 |
| | Base metal-containing compound | CuI | pt. by mass | - | - | 0.03 | 0.07 | 0.03 |
| | Iodine-containing compound | KI | pt. by mass | - | - | 0.1 | 0.65 | 0.1 |
| | Nucleating agent | Talc | pt. by mass | 1 | 1 | 1 | 1 | 1 |
| | Content of base metal element | | ppm by mass | - | - | 96 | 221 | 96 |
| | Content of elemental copper | | ppm by mass | - | - | 96 | 221 | 96 |
| | Content of elemental iodine | | ppm by mass | - | - | 390 | 5304 | 390 |
| | Molar ratio of elemental iodine to base metal element | (I)/(M) | - | - | - | 2 | 12 | 2 |
| | (3) Density | | g/cm$^3$ | 0.30 | 0.30 | 0.31 | 0.33 | 0.30 |
| | (4) Closed cell ratio | | % | 93 | 98 | 96 | 94 | 94 |
| | (6) Thermal fusion temp | | °C | 116 | 116 | 116 | 116 | 116 |
| | (5) Expansion ratio (Thermal fusion temp + 0 °C) | | - | 1.2 | 1.1 | 1.4 | 1.6 | 1.2 |
| | (5) Expansion ratio (Thermal fusion temp + 3 °C) | | - | 1.3 | 1.2 | 1.7 | 1.6 | 1.5 |
| | (5) Expansion ratio (Thermal fusion temp + 5 °C) | | - | 1.3 | 1.2 | 1.2 | 1.1 | 1.7 |
| | (7) Extrapolated melting start temp measured under water | | °C | 112 | 111 | 112 | 112 | 111 |
| | (5) Expansion ratio B (Extrapolated melting start temp measured under water + 10 °C) | | - | 1.2 | 1.2 | 1.2 | 1.1 | 1.7 |
| | (9) Tempetature of maximum endothermic peak | | °C | 171 | 175 | 174 | 173 | 175 |
| | (9) Width of maximum endothermic peak | | °C | 44 | 46 | 46 | 46 | 48 |
| | (10) Water content ratio | | - | 7.5 | 7.7 | 7.8 | 7.5 | 7.6 |
| | (13) Molten crystal ratio | | % | 40.1 | 27.8 | 39.3 | 36.1 | 29.0 |

(continued)

| | | | | | | | | |
|---|---|---|---|---|---|---|---|---|
| Polyamide-based resin foam shaped product | (F) Specific volume | | cc/g | 5.5 | 5.6 | 5.4 | 5.5 | 5.2 |
| | (G) Bending strength | | MPa | 1.7 | 2.0 | 1.8 | 3.1 | 4.9 |
| | (D) Fusion rate | | % | 96 | 100 | 91 | 93 | 94 |
| | (A) Heat resistance (150 °C) | Rate of dimensional change | % | 0.3 | 0.4 | 0.2 | 0.3 | 0.4 |
| | | Change in external appearance | - | A | A | A | A | A |
| | (A) Heat resistance (170 °C) | Rate of dimensional change | % | 0.5 | 0.6 | 0.5 | 0.6 | 0.5 |
| | | Change in external appearance | - | A | A | A | A | A |
| | (B) Bending strength | After heating | MPa | 1.6 | 1.9 | 1.8 | 4.2 | 5.4 |
| | | Strength retention rate | - | 94 | 95 | 100 | 135 | 110 |
| | (C) External appearance | | - | A | A | A | A | A |
| | (E) Oil resistance | | - | A | A | A | A | A |

INDUSTRIAL APPLICABILITY

The polyamide-based resin foam shaped product of the present disclosure can be suitably adopted for an insulting material, automotive component (for example, an oil pan, a cover-shaped component such as an engine cover or cylinder head cover, an intake manifold, an integrated component thereof, a duct, or an electrical equipment case, or a battery case) used under high-temperature conditions, such as to exploit the features of the polyamide-based resin foam shaped product.

**Claims**

1. Polyamide-based resin pre-expanded particles **characterized by** the following (A) or (B):

   (A)
   the polyamide-based resin pre-expanded particles comprising a polyamide-based resin;

   wherein the polyamide-based resin pre-expanded particles further comprise a base metal element in an amount from 10 mass ppm to 3000 mass ppm with respect to 100 mass% of the polyamide-based resin, where the base metal element is selected from the group consisting of iron, copper, nickel, lead, zinc, tin, tungsten, molybdenum, tantalum, cobalt, bismuth, cadmium, titanium, zirconium, antimony, manganese, beryllium, chromium, germanium, vanadium, gallium, hafnium, indium, niobium, rhenium, and thallium, and wherein the polyamide-based resin pre-expanded particles have an expansion ratio of 1.0 or more, the expansion ratio being a ratio ($\rho1/\rho2$) of a density $\rho1$ ($g/cm^3$) to a density $\rho2$ ($g/cm^3$) after being pressurized with air at 0.9 MPa and then heated for 30 seconds with saturated steam at a temperature higher than a thermal fusion temperature by 5 °C;

   (B)
   the polyamide-based resin pre-expanded particles comprising a polyamide-based resin,
   wherein the polyamide-based resin pre-expanded particles have an expansion ratio B of 1.0 or more, the expansion ratio B being a ratio ($\rho1/\rho3$) of a density $\rho1$ ($g/cm^3$) to a density $\rho3$ ($g/cm^3$) after being pressurized with air at 0.9 MPa and then heated for 30 seconds with saturated steam at a temperature higher than an extrapolated melting start temperature measured under water by 10 °C, the extrapolated melting start temperature measured under water being measured under the following Condition B using a differential scanning calorimeter:

   Condition B:

in a second scan DSC curve obtained when the polyamide-based resin pre-expanded particles are sealed in a sealable pressure-resistant container made of aluminum while being immersed in pure water, heated to melt at a heating rate of 10 °C/min by the differential scanning calorimeter (DSC), subsequently cooled to solidify at a cooling rate of 10 °C/min, and heated to melt again at 10 °C/min by the differential scanning calorimeter (DSC), when a straight line approximating a DSC curve on a high temperature side relative to a maximum endothermic peak after an end of melting is used as a baseline, the extrapolated melting start temperature measured under water is defined as a temperature at an intersection point between a tangent line at an inflection point on a low temperature side relative to the maximum endothermic peak and the baseline

and wherein a peak temperature of a maximum endothermic peak of the polyamide-based resin pre-expanded particles is 150 °C or higher and 255 °C or lower in a DSC curve measured under the following Condition A using a differential scanning calorimeter, and a width of the maximum endothermic peak of the polyamide-based resin pre-expanded particles is 25 °C or greater and 80 °C or smaller when a straight line approximating the DSC curve on a high temperature side relative to the maximum endothermic peak after an end of melting is used as a baseline, the width corresponding to a difference between an extrapolated melting start temperature which is a temperature at an intersection point between a tangent line at an inflection point of the maximum endothermic peak on a low temperature side and the baseline, and an extrapolated melting end temperature which is a temperature at an intersection point between a tangent line at an inflection point of the maximum endothermic peak on a high temperature side and the baseline,

Condition A:
the DSC curve is obtained when being heated from 30 °C to 280 °C under a condition of a heating rate of 10 °C/min.

2. The polyamide-based resin pre-expanded particles according to claim 1, wherein the particles **characterized by** (B) further comprises a base metal element in an amount from 10 mass ppm to 3000 mass ppm with respect to 100 mass% of the polyamide-based resin.

3. The polyamide-based resin pre-expanded particles according to claim 2, wherein the base metal element is copper element or zinc element.

4. The polyamide-based resin pre-expanded particles according to claim 2 or 3, further comprising iodine element in an amount from 10 mass ppm to 6000 mass ppm with respect to 100 mass% of the polyamide-based resin, wherein a molar ratio of iodine element to the base metal element (iodine element / base metal element) is 1 or more.

5. The polyamide-based resin pre-expanded particles according to any one of claims 1 to 4, wherein the polyamide-based resin has:

a number average molecular weight Mn of 10,000 or more and 35,000 or less, and a weight average molecular weight Mw of 35,000 or more and 140,000 or less, the number average molecular weight Mn and the weight average molecular weight Mw being measured by:

dissolving the sample in hexafluoroisopropanol (+ 10 mmol/L of sodium trifluoroacetate) to prepare a 0.2-w/v% sample solution,
filtering this sample solution through a membrane filter (0.2 $\mu$m) and injecting 10 $\mu$L of the filtered sample solution into a GPC (Shodex GPC-104) and detecting the eluted solution by an RI detector, using the following elution conditions: eluent: hexafluoroisopropanol (+ 10mmol/L of sodium trifluoroacetate), columns: two Shodex GPC LF-404 columns which were connected, column temperature: 40 °C, and flow rate: 0.3mL/min,
preparing a calibration curve in advance using solutions of PMMA having known molecular weights,
determining the number average molecular weight Mn and the weight average molecular weight Mw in terms of PMMA from the obtained chromatogram on the basis of the calibration curve.

6. The polyamide-based resin pre-expanded particles according to any one of claims 1 to 5, wherein a sum of an acid value and an amine value measured by a potentiometric titration method (acid value + amine value) of the polyamide-based resin is 2.5 mg KOH/g or more and 8.0 mg KOH/g or less.

7. The polyamide-based resin pre-expanded particles according to any one of claims 1 to 6, wherein for the polyamide-based resin pre-expanded particles characterized according to (A)

a peak temperature of a maximum endothermic peak is 150 °C or higher and 255 °C or lower in a DSC curve measured under the following Condition A using a differential scanning calorimeter, and
a width of the maximum endothermic peak is 25 °C or greater and 80 °C or smaller when a straight line approximating the DSC curve on a high temperature side relative to the maximum endothermic peak after an end of melting is used as a baseline, the width corresponding to a difference between an extrapolated melting start temperature which is a temperature at an intersection point between a tangent line at an inflection point of the maximum endothermic peak on a low temperature side and the baseline, and an extrapolated melting end temperature which is a temperature at an intersection point between a tangent line at an inflection point of the maximum endothermic peak on a high temperature side and the baseline,
Condition A:
the DSC curve is obtained when being heated from 30 °C to 280 °C under a condition of a heating rate of 10 °C/min.

8. The polyamide-based resin pre-expanded particles according to any one of claims 1 to 7, wherein the peak temperature of the maximum endothermic peak is 150 °C or higher and 215 °C or lower in a DSC curve measured under the Condition A using a differential scanning calorimeter.

9. The polyamide-based resin pre-expanded particles according to any one of claims 1 to 8, wherein the polyamide-based resin comprises a polyamide-based resin (A) and a polyamide-based resin (B) having a melting point higher than a melting point of the polyamide-based resin (A).

10. The polyamide-based resin pre-expanded particles according to claim 9, wherein a mass ratio of the polyamide-based resin (B) to 100 parts by mass of the polyamide-based resin (A) is 20 parts by mass or less.

11. The polyamide-based resin pre-expanded particles according to any one of claims 1 to 10, comprising 50 mass% or more of a crystalline polyamide resin with respect to 100 mass% of the polyamide-based resin.

12. The polyamide-based resin pre-expanded particles according to claim 11, wherein the crystalline polyamide resin is an aliphatic polyamide resin, wherein the crystalline polyamide resin is a polymer having amide bonds (-NHCO-) in the main chain and having a melting calorie of 1 J/g or more as determined by differential scanning calorimeter (DSC) determined from the peak area of an endothermic peak (melting peak) which is obtained when 8 mg of a sample is kept at 300 °C for 2 minutes under a nitrogen atmosphere, cooled to 40 °C at a temperature lowering rate of 20 °C/min, kept at 40 °C again for 2 minutes, and then heated at a temperature raising rate of 20 °C/min.

13. The polyamide-based resin pre-expanded particles according to any one of claims 1 to 12, wherein

in a second scan DSC curve obtained using a differential scanning calorimeter under the following Condition B, a molten crystal ratio at a temperature higher than an extrapolated melting start temperature by 10 °C is 20% or more, the extrapolated melting start temperature being defined, when a straight line approximating a DSC curve on a high temperature side relative to a maximum endothermic peak after an end of melting is used as a baseline, as a temperature at an intersection point between a tangent line at an inflection point on a low temperature side relative to the maximum endothermic peak and the baseline,
Condition B:
a second DSC curve is defined as a DSC curve obtained when the polyamide-based resin pre-expanded particles are sealed in a sealable pressure-resistant container made of aluminum while being immersed in pure water, heated to melt at a heating rate of 10 °C/min by the differential scanning calorimeter (DSC), subsequently cooled to solidify at a cooling rate of 10 °C/min, and heated to melt again at 10 °C/min by the differential scanning calorimeter (DSC).

14. A polyamide-based resin foam shaped product produced from the polyamide-based resin pre-expanded particles according to any one of claims 1 to 13.

15. A method of producing a polyamide-based resin foam shaped product, comprising:

loading the polyamide-based resin pre-expanded particles according to any one of claims 1 to 13 in a cavity of a mold; and

supplying steam at a temperature equal to or lower than a melting point of the polyamide-based resin pre-expanded particles into the cavity to cause expansion and thermal fusion of the polyamide-based resin pre-expanded particles.

**Patentansprüche**

1. Vorexpandierte Teilchen aus Harz auf Polyamid-Basis, **gekennzeichnet durch** das folgende (A) oder (B):

   (A)

   die vorexpandierten Teilchen aus Harz auf Polyamid-Basis umfassen ein Harz auf Polyamid-Basis;
   wobei die vorexpandierten Teilchen aus Harz auf Polyamid-Basis ferner ein Nichtedelmetallelement in einer Menge von 10 Massen-ppm bis 3000 Massen-ppm, bezogen auf 100 Massen-% des Harzes auf Polyamid-Basis, umfassen, wobei das Nichtedelmetallelement aus der Gruppe bestehend aus Eisen, Kupfer, Nickel, Blei, Zink, Zinn, Wolfram, Molybdän, Tantal, Cobalt, Bismut, Cadmium, Titan, Zirconium, Antimon, Mangan, Beryllium, Chrom, Germanium, Vanadium, Gallium, Hafnium, Indium, Niob, Rhenium und Thallium ausgewählt ist, und
   wobei die vorexpandierten Teilchen aus Harz auf Polyamid-Basis ein Expansionsverhältnis von 1,0 oder mehr aufweisen, wobei das Expansionsverhältnis ein Verhältnis ($\rho1/\rho2$) einer Dichte $\rho1$ (g/cm$^3$) zu einer Dichte $\rho2$ (g/cm$^3$) nach Beaufschlagen mit Luft bei 0,9 MPa und anschließendem 30-sekündigem Erhitzen mit gesättigtem Wasserdampf bei einer Temperatur, die um 5 °C über einer thermischen Verschmelzungstemperatur liegt, ist;

   (B)

   die vorexpandierten Teilchen aus Harz auf Polyamid-Basis umfassen ein Harz auf Polyamid-Basis,
   wobei die vorexpandierten Teilchen aus Harz auf Polyamid-Basis ein Expansionsverhältnis B von 1,0 oder mehr aufweisen, wobei das Expansionsverhältnis B ein Verhältnis ($\rho1/\rho3$) einer Dichte $\rho1$ (g/cm$^3$) zu einer Dichte $\rho3$ (g/cm$^3$) nach Beaufschlagen mit Luft bei 0,9 MPa und anschließendem 30-sekündigem Erhitzen mit gesättigtem Wasserdampf bei einer Temperatur, die um 10 °C über einer unter Wasser gemessenen extrapolierten Schmelzanfangstemperatur liegt, ist, wobei die unter Wasser gemessene extrapolierte Schmelzanfangstemperatur unter der folgenden Bedingung B unter Verwendung eines Differentialkalorimeters gemessen wird:

   Bedingung B:

   in einer Zweitscan-DSC-Kurve, die erhalten wird, wenn die vorexpandierten Teilchen aus Harz auf Polyamid-Basis in einem verschließbaren, druckfesten Behälter aus Aluminium unter Eintauchen in reines Wasser verschlossen werden, mit dem Differentialkalorimeter (DSC) mit einer Aufheizrate von 10 °C/min bis zum Schmelzen erhitzt, anschließend mit einer Abkühlrate von 10 °C/min bis zur Verfestigung abgekühlt und erneut mit dem Differentialkalorimeter (DSC) bei 10 °C/min bis zum Schmelzen erhitzt werden, wenn eine Gerade, die einer DSC-Kurve auf einer Hochtemperaturseite relativ zu einem maximalen endothermen Peak nach einem Ende des Schmelzens in etwa entspricht, als Basislinie verwendet wird, ist die unter Wasser gemessene extrapolierte Schmelzanfangstemperatur als eine Temperatur an einem Schnittpunkt zwischen einer Tangente an einem Wendepunkt auf einer Niedertemperaturseite relativ zum maximalen endothermen Peak und der Basislinie definiert,
   und wobei eine Spitzentemperatur eines maximalen endothermen Peaks der vorexpandierten Teilchen aus Harz auf Polyamid-Basis in einer unter der folgenden Bedingung A unter Verwendung eines Differentialkalorimeters gemessenen DSC-Kurve 150 °C oder mehr und 255 °C oder weniger beträgt und eine Breite des maximalen endothermen Peaks der vorexpandierten Teilchen aus Harz auf Polyamid-Basis 25 °C oder mehr und 80 °C oder weniger beträgt, wenn eine Gerade, die der DSC-Kurve auf einer Hochtemperaturseite relativ zu dem maximalen endothermen Peak nach einem Ende des Schmelzens in etwa entspricht, als Basislinie verwendet wird, wobei die Breite einer Differenz zwischen einer extrapolierten Schmelzanfangstemperatur, die eine Temperatur an einem Schnittpunkt zwischen einer Tangente an einem Wendepunkt des maximalen endothermen Peaks auf einer Niedertemperaturseite und der Basislinie ist, und einer extrapolierten Schmelzendtemperatur, die eine Temperatur an einem Schnittpunkt zwischen einer Tangente an einem Wendepunkt des maximalen endothermen Peaks auf einer Hochtemperaturseite und der Basislinie ist, entspricht,

Bedingung A:
die DSC-Kurve wird beim Erhitzen von 30 °C auf 280 °C unter einer Bedingung einer Aufheizrate von 10 °C/min erhalten.

2. Vorexpandierte Teilchen aus Harz auf Polyamid-Basis nach Anspruch 1, wobei die durch (B) gekennzeichneten Teilchen ferner ein Nichtedelmetallelement in einer Menge von 10 Massen-ppm bis 3000 Massen-ppm, bezogen auf 100 Massen-% des Harzes auf Polyamid-Basis, umfassen.

3. Vorexpandierte Teilchen aus Harz auf Polyamid-Basis nach Anspruch 2, wobei es sich bei dem Nichtedelmetallelement um Kupfer- oder Zinkelement handelt.

4. Vorexpandierte Teilchen aus Harz auf Polyamid-Basis nach Anspruch 2 oder 3, ferner umfassend Iodelement in einer Menge von 10 Massen-ppm bis 6000 Massen-ppm, bezogen auf 100 Massen-% des Harzes auf Polyamid-Basis, wobei ein molares Verhältnis von Iodelement zu Nichtedelmetallelement (Iodelement/Nichtedelmetallelement) 1 oder mehr beträgt.

5. Vorexpandierte Teilchen aus Harz auf Polyamid-Basis nach einem der Ansprüche 1 bis 4, wobei das Harz auf Polyamidbasis Folgendes aufweist:

ein zahlenmittleres Molekulargewicht Mn von 10.000 oder mehr und 35.000 oder weniger und ein gewichtsmittleres Molekulargewicht Mw von 35.000 oder mehr und 140.000 oder weniger, wobei das zahlenmittlere Molekulargewicht Mn und das gewichtsmittlere Molekulargewicht MW gemessen werden durch:

Lösen der Probe in Hexafluorisopropanol (+ 10 mmol/l Natriumtrifluoracetat) zur Herstellung einer 0,2-w/v% igen Probenlösung,
Filtrieren dieser Probenlösung über ein Membranfilter (0,2 µm) und Einspritzen von 10 µl der filtrierten Probenlösung in ein GPC (Shodex GPC-104) und Detektieren der eluierten Lösung mit einem RI-Detektor unter Verwendung der folgenden Elutionsbedingungen: Elutionsmittel: Hexafluorisopropanol (+ 10 mmol/l Natriumtrifluoracetat), Säulen: zwei miteinander verbundene Shodex-GPC-LF-404-Säulen, Säulentemperatur: 40 °C und Durchflussrate: 0,3 ml/min,
Erstellen einer Kalibrationskurve im Voraus unter Verwendung von Lösungen von PMMA mit bekannten Molekulargewichten,
Bestimmen des zahlenmittleren Molekulargewichts Mn und des gewichtsmittleren Molekulargewichts Mw in Bezug auf PMMA aus dem erhaltenen Chromatogramm auf der Basis der Kalibrationskurve.

6. Vorexpandierte Teilchen aus Harz auf Polyamid-Basis nach einem der Ansprüche 1 bis 5, wobei eine Summe aus einer Säurezahl und einer Aminzahl, gemessen durch eine potentiometrische Titrationsmethode, (Säurezahl + Aminzahl) des Harzes auf Polyamid-Basis 2,5 mg KOH/g oder mehr und 8,0 mg KOH/g oder weniger beträgt.

7. Vorexpandierte Teilchen aus Harz auf Polyamid-Basis nach einem der Ansprüche 1 bis 6, wobei für die gemäß (A) gekennzeichneten vorexpandierten Teilchen aus Harz auf Polyamid-Basis

eine Spitzentemperatur eines maximalen endothermen Peaks in einer unter der folgenden Bedingung A unter Verwendung eines Differentialkalorimeters gemessenen DSC-Kurve 150 °C oder mehr und 255 °C oder weniger beträgt und
eine Breite des maximalen endothermen Peaks 25 °C oder mehr und 80 °C oder weniger beträgt, wenn eine Gerade, die der DSC-Kurve auf einer Hochtemperaturseite relativ zu dem maximalen endothermen Peak nach einem Ende das Schmelzens in etwa entspricht, als Basislinie verwendet wird, wobei die Breite einer Differenz zwischen einer extrapolierten Schmelzanfangstemperatur, die eine Temperatur an einem Schnittpunkt zwischen einer Tangente an einem Wendepunkt des maximalen endothermen Peaks auf einer Niedertemperaturseite und der Basislinie ist, und einer extrapolierten Schmelzendtemperatur, die eine Temperatur an einem Schnittpunkt zwischen einer Tangente an einem Wendepunkt des maximalen endothermen Peaks auf einer Hochtemperaturseite und der Basislinie ist, entspricht,

Bedingung A:
die DSC-Kurve wird beim Erhitzen von 30 °C auf 280 °C unter einer Bedingung einer Aufheizrate von 10 °C/min erhalten.

8. Vorexpandierte Teilchen aus Harz auf Polyamid-Basis nach einem der Ansprüche 1 bis 7, wobei die Spitzentemperatur eines maximalen endothermen Peaks in einer unter der Bedingung A unter Verwendung eines Differentialkalorimeters gemessenen DSC-Kurve 150 °C oder mehr und 215 °C oder weniger beträgt.

9. Vorexpandierte Teilchen aus Harz auf Polyamid-Basis nach einem der Ansprüche 1 bis 8, wobei das Harz auf Polyamid-Basis ein Harz (A) auf Polyamid-Basis und ein Harz (B) auf Polyamid-Basis mit einem Schmelzpunkt, der über einem Schmelzpunkt des Harzes (A) auf Polyamid-Basis liegt, umfasst.

10. Vorexpandierte Teilchen aus Harz auf Polyamid-Basis nach Anspruch 9, wobei ein Massenverhältnis des Harzes (B) auf Polyamid-Basis zu 100 Massenteilen des Harzes (A) auf Polyamid-Basis 20 Massenteile oder weniger beträgt.

11. Vorexpandierte Teilchen aus Harz auf Polyamid-Basis nach einem der Ansprüche 1 bis 10, umfassend 50 Massen-% oder mehr eines kristallinen Polyamidharzes bezogen auf 100 Massen-% des Harzes auf Polyamid-Basis.

12. Vorexpandierte Teilchen aus Harz auf Polyamid-Basis nach Anspruch 11, wobei es sich bei dem kristallinen Polyamidharz um ein aliphatisches Polyamidharz handelt, wobei das kristalline Polyamidharz ein Polymer mit Amidbindungen (-NHCO-) in der Hauptkette ist und eine Schmelzwärme von 1 J/g oder mehr gemäß Bestimmung mit einem Differentialkalorimeter (DSC) aufweist, bestimmt aus der Peakfläche eines endothermen Peaks (Schmelzpeaks), der erhalten wird, wenn 8 mg einer Probe unter Stickstoffatmosphäre 2 Minuten bei 300 °C gehalten, mit einer Temperatursenkungsrate von 20 °C/min auf 40 °C abgekühlt, wieder 2 Minuten bei 40 °C gehalten und dann mit einer Temperaturerhöhungsrate von 20 °C/min erhitzt werden.

13. Vorexpandierte Teilchen aus Harz auf Polyamid-Basis nach einem der Ansprüche 1 bis 12, wobei in einer unter Verwendung eines Differentialkalorimeters unter der folgenden Bedingung B erhaltenen Zweitscan-DSC-Kurve

ein Anteil von geschmolzenen Kristallen bei einer Temperatur, die um 10 °C über einer extrapolierten Schmelzanfangstemperatur liegt, 20 % oder mehr beträgt, wobei die extrapolierte Schmelzanfangstemperatur, wenn eine Gerade, die einer DSC-Kurve auf einer Hochtemperaturseite relativ zu einem maximalen endothermen Peak nach einem Ende des Schmelzens in etwa entspricht, als Basislinie verwendet wird, als eine Temperatur an einem Schnittpunkt zwischen einer Tangente an einem Wendepunkt auf einer Niedertemperaturseite relativ zum maximalen endothermen Peak und der Basislinie definiert ist,
Bedingung B:
eine zweite DSC-Kurve als eine DSC-Kurve definiert ist, die erhalten wird, wenn die vorexpandierten Teilchen aus Harz auf Polyamid-Basis in einem verschließbaren, druckfesten Behälter aus Aluminium unter Eintauchen in reines Wasser verschlossen werden, mit dem Differentialkalorimeter (DSC) mit einer Aufheizrate von 10 °C/min bis zum Schmelzen erhitzt, anschließend mit einer Abkühlrate von 10 °C/min bis zur Verfestigung abgekühlt und erneut mit dem Differentialkalorimeter (DSC) bei 10 °C/min bis zum Schmelzen erhitzt werden.

14. Geformtes Schaumstoffprodukt aus Harz auf Polyamid-Basis, hergestellt aus den vorexpandierten Teilchen aus Harz auf Polyamid-Basis nach einem der Ansprüche 1 bis 13.

15. Verfahren zur Herstellung eines geformten Schaumstoffprodukts aus Harz auf Polyamid-Basis, das Folgendes umfasst:

Laden der vorexpandierten Teilchen aus Harz auf Polyamid-Basis nach einem der Ansprüche 1 bis 13 in einen Hohlraum eines Formwerkzeugs; und
Zuführen von Wasserdampf bei einer Temperatur, die gleich oder kleiner als ein Schmelzpunkt der vorexpandierten Teilchen aus Harz auf Polyamid-Basis ist, in den Hohlraum zum Bewirken von Expansion und thermischem Verschmelzen der vorexpandierten Teilchen aus Harz auf Polyamid-Basis.

**Revendications**

1. Particules pré-expansées de résine à base de polyamide **caractérisées par** les points (A) ou (B) suivants :

(A)

les particules pré-expansées de résine à base de polyamide comprenant une résine à base de polyamide ;
dans lesquelles les particules pré-expansées de résine à base de polyamide comprennent en outre un élément métallique de base en une quantité de 10 ppm en masse à 3 000 ppm en masse par rapport à 100 % en masse de la résine à base de polyamide, l'élément métallique de base étant choisi dans le groupe constitué par le fer, le cuivre, le nickel, le plomb, le zinc, l'étain, le tungstène, le molybdène, le tantale, le cobalt, le bismuth, le cadmium, le titane, le zirconium, l'antimoine, le manganèse, le béryllium, le chrome, le germanium, le vanadium, le gallium, l'hafnium, l'indium, le niobium, le rhénium et le thallium, et
dans lesquelles les particules pré-expansées de résine à base de polyamide ont un rapport d'expansion de 1,0 ou plus, le rapport d'expansion étant un rapport ($\rho 1/ \rho 2$) d'une densité $\rho 1$ (g/cm$^3$) sur une densité $\rho 2$ (g/cm$^3$) après avoir été pressurisées avec de l'air à 0,9 MPa puis chauffées pendant 30 secondes avec de la vapeur saturée à une température supérieure de 5 °C à une température de fusion thermique ;

(B)

les particules pré-expansées de résine à base de polyamide comprenant une résine à base de polyamide, dans lesquelles les particules pré-expansées de résine à base de polyamide ont un rapport d'expansion B de 1,0 ou plus, le rapport d'expansion B étant un rapport ($\rho 1/ \rho 3$) d'une densité $\rho 1$ (g/cm$^3$) sur une densité $\rho 3$ (g/cm$^3$) après avoir été pressurisées avec de l'air à 0,9 MPa puis chauffées pendant 30 secondes avec de la vapeur saturée à une température supérieure de 10 °C à une température de début de fusion extrapolée mesurée sous eau, la température de début de fusion extrapolée mesurée sous l'eau étant mesurée dans la condition B suivante à l'aide d'un calorimètre différentiel à balayage :

Condition B :

dans une deuxième courbe de balayage de DSC obtenue lorsque les particules pré-expansées de résine à base de polyamide sont scellées dans un récipient scellable résistant à la pression composé d'aluminium tout en étant immergées dans de l'eau pure, chauffées pour fondre à une vitesse de chauffage de 10 °C/min par le calorimètre différentiel à balayage (DSC), refroidies ensuite pour solidifier à une vitesse de refroidissement de 10 °C/min, et chauffées pour fondre à nouveau à 10 °C/min par le calorimètre différentiel à balayage (DSC), lorsqu'une ligne droite approchant une courbe de DSC sur un côté haute température par rapport à un pic endothermique maximum après une fin de fusion est utilisée comme une ligne de base, la température de début de fusion extrapolée mesurée sous l'eau est définie comme une température à un point d'intersection entre une ligne tangente à un point d'inflexion sur un côté basse température par rapport au pic endothermique maximum et la ligne de base
et dans lesquelles une température maximale d'un pic endothermique maximal des particules pré-expansées de résine à base de polyamide est de 150 °C ou plus et de 255 °C ou moins dans une courbe de DSC mesurée dans la condition A suivante à l'aide d'un calorimètre différentiel à balayage, et une largeur du pic endothermique maximal des particules pré-expansées de résine à base de polyamide est de 25 °C ou plus et 80 °C ou moins lorsqu'une ligne droite approchant de la courbe de DSC sur un côté haute température par rapport au pic endothermique maximal après une fin de fusion est utilisée comme ligne de base, la largeur correspondant à une différence entre une température de début de fusion extrapolée, qui est une température à un point d'intersection entre une ligne tangente à un point d'inflexion du pic endothermique maximal sur un côté basse température et la ligne de base, et une température de fin de fusion extrapolée, qui est une température à un point d'intersection entre une ligne tangente à un point d'inflexion du pic endothermique maximal sur un côté haute température et la ligne de base,

Condition A :
la courbe de DSC est obtenue lorsqu'elles sont chauffées de 30 °C à 280 °C dans une condition à une vitesse de chauffage de 10 °C/min.

**2.** Particules pré-expansées de résine à base de polyamide selon la revendication 1, dans lesquelles les particules **caractérisées par** (B) comprennent en outre un élément métallique de base en une quantité de 10 ppm en masse à 3 000 ppm en masse par rapport à 100 % en masse de la résine à base de polyamide.

3. Particules pré-expansées de résine à base de polyamide selon la revendication 2, dans lesquelles l'élément métallique de base est l'élément cuivre ou l'élément zinc.

4. Particules pré-expansées de résine à base de polyamide selon la revendication 2 ou 3, comprenant en outre l'élément iode en une quantité de 10 ppm en masse à 6 000 ppm en masse par rapport à 100 % en masse de la résine à base de polyamide,
   dans lesquelles un rapport molaire de l'élément iode sur l'élément métallique de base (élément iode/élément métallique de base) est de 1 ou plus.

5. Particules pré-expansées de résine à base de polyamide selon l'une quelconque des revendications 1 à 4, dans lesquelles
   la résine à base de polyamide a :

   un poids moléculaire moyen en nombre Mn de 10 000 ou plus et 35 000 ou moins, et
   un poids moléculaire moyen en poids Mw de 35 000 ou plus et 140 000 ou moins, le poids moléculaire moyen en nombre Mn et le poids moléculaire moyen en poids Mw étant mesurés par :

   dissolution de l'échantillon dans de l'hexafluoroisopropanol (+ 10 mmol/L de trifluoroacétate de sodium) pour préparer une solution d'échantillon à 0,2 % p/v,
   filtration de cette solution d'échantillon sur un filtrat membrane (0,2 μm) et injection de 10 μL de la solution d'échantillon filtrée dans une GPC (Shodex GPC-104) et détection de la solution éluée par un détecteur RI, en utilisant les conditions d'élution suivantes : éluant : hexafluoroisopropanol (+ 10mmol/L de trifluoroacétate de sodium), colonnes : deux colonnes Shodex GPC LF-404 qui ont été reliées, température de colonne : 40 °C et débit : 0,3 mL/min,
   préparation à l'avance d'une courbe d'étalonnage à l'aide de solutions de PMMA ayant des poids moléculaires connus, détermination du poids moléculaire moyen en nombre Mn et du poids moléculaire moyen en poids Mw en termes de PMMA à partir du chromatogramme obtenu sur la base de la courbe d'étalonnage.

6. Particules pré-expansées de résine à base de polyamide selon l'une quelconque des revendications 1 à 5, dans lesquelles une somme d'un indice d'acide et d'un indice d'amine mesurés par un procédé de titrage potentiométrique (indice d'acide + indice d'amine) de la résine à base de polyamide est de 2,5 mg KOH/g ou plus et de 8,0 mg KOH/g ou moins.

7. Particules pré-expansées de résine à base de polyamide selon l'une quelconque des revendications 1 à 6, dans lesquelles pour les particules pré-expansées de résine à base de polyamide caractérisées selon (A)

   une température maximale d'un pic endothermique maximal est de 150 °C ou plus et de 255 °C ou moins dans une courbe de DSC mesurée dans la condition A suivante à l'aide d'un calorimètre différentiel à balayage, et une largeur du pic endothermique maximal est de 25 °C ou plus et 80 °C ou moins lorsqu'une ligne droite approchant de la courbe de DSC sur un côté haute température par rapport au pic endothermique maximal après une fin de fusion est utilisée comme ligne de base, la largeur correspondant à une différence entre une température de début de fusion extrapolée, qui est une température à un point d'intersection entre une ligne tangente à un point d'inflexion du pic endothermique maximal sur un côté basse température et la ligne de base, et une température de fin de fusion extrapolée, qui est une température à un point d'intersection entre une ligne tangente à un point d'inflexion du pic endothermique maximal sur côté haute température et la ligne de base,
   Condition A :
   la courbe de DSC est obtenue lorsqu'elles sont chauffées de 30 °C à 280 °C dans une condition à une vitesse de chauffage de 10 °C/min.

8. Particules pré-expansées de résine à base de polyamide selon l'une quelconque des revendications 1 à 7, dans lesquelles la température maximale du pic endothermique maximal est de 150°C ou plus et 215°C ou moins dans une courbe de DSC mesurée dans la condition A en utilisant un calorimètre différentiel à balayage.

9. Particules pré-expansées de résine à base de polyamide selon l'une quelconque des revendications 1 à 8, dans lesquelles la résine à base de polyamide comprend une résine à base de polyamide (A) et une résine à base de polyamide (B) ayant un point de fusion supérieur à un point de fusion de la résine à base de polyamide (A).

10. Particules pré-expansées de résine à base de polyamide selon la revendication 9, dans lesquelles un rapport massique de la résine à base de polyamide (B) sur 100 parties en masse de la résine à base de polyamide (A) est de 20 parties en masse ou moins.

11. Particules pré-expansées de résine à base de polyamide selon l'une quelconque des revendications 1 à 10, comprenant 50 % en masse ou plus d'une résine de polyamide cristalline par rapport à 100 % en masse de la résine à base de polyamide.

12. Particules pré-expansées de résine à base de polyamide selon la revendication 11, dans lesquelles la résine de polyamide cristalline est une résine de polyamide aliphatique, dans lesquelles la résine de polyamide cristalline est un polymère ayant des liaisons amide (-NHCO-) dans la chaîne principale et ayant une calorie de fusion de 1 J/g ou plus, comme déterminée par un calorimètre différentiel à balayage (DSC) déterminé à partir de la surface de pic d'un pic endothermique (pic de fusion) qui est obtenu lorsque 8 mg d'un échantillon sont maintenus à 300 °C pendant 2 minutes sous une atmosphère d'azote, refroidis jusqu'à 40 °C à une vitesse d'abaissement de la température de 20 °C/min, maintenus à nouveau à 40 °C pendant 2 minutes, et puis chauffés à une vitesse d'élévation de la température de 20 °C/min.

13. Particules pré-expansées de résine à base de polyamide selon l'une quelconque des revendications 1 à 12, dans lesquelles

dans une deuxième courbe de DSC de balayage obtenue à l'aide d'un calorimètre différentiel à balayage dans la condition B suivante,
un rapport de cristaux fondus à une température supérieure de 10 °C à une température de début de fusion extrapolée est de 20 % ou plus, la température de début de fusion extrapolée étant définie, lorsqu'une ligne droite approchant une courbe de DSC sur un côté haute température par rapport à un pic endothermique maximal après une fin de la fusion est utilisée comme ligne de base, en tant que température à un point d'intersection entre une ligne tangente à un point d'inflexion sur un côté basse température par rapport au pic endothermique maximal et à la ligne de base,
Condition B :
une deuxième courbe de DSC est définie comme une courbe de DSC obtenue lorsque les particules pré-expansées de résine à base de polyamide sont scellées dans un récipient scellable résistant à la pression composé d'aluminium tout en étant immergées dans de l'eau pure, chauffées pour fondre à une vitesse de chauffage de 10 °C/min par le calorimètre différentiel à balayage (DSC), puis refroidies pour solidifier à une vitesse de refroidissement de 10 °C/min, et chauffées pour fondre à nouveau à 10 °C/min par le calorimètre à balayage différentiel (DSC).

14. Produit façonné en mousse de résine à base de polyamide produit à partir des particules pré-expansées de résine à base de polyamide selon l'une quelconque des revendications 1 à 13.

15. Procédé de production d'un produit façonné en mousse de résine à base de polyamide, comprenant :

le chargement des particules pré-expansées de résine à base de polyamide selon l'une quelconque des revendications 1 à 13 dans une cavité d'un moule ; et
l'apport de vapeur à une température égale ou inférieure à un point de fusion des particules pré-expansées de résine à base de polyamide dans la cavité pour provoquer l'expansion et la fusion thermique des particules pré-expansées de résine à base de polyamide.

FIG. 1

DSC Curve

EP 3 950 794 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016147582 A
- JP 61268737 A
- JP 2011105879 A
- JP 2018044127 A